# EUROPEAN PATENT APPLICATION

(11) **EP 4 657 258 A1**
(43) Date of publication of application: **03.12.2025**
(21) Application number: 23922337.3
(22) Date of filing: 24.10.2023
(51) Int. Cl.: G06F 9/54, G06V 20/20, H04L 67/00

(54) **SYNCHRONOUS DISPLAY METHOD, ELECTRONIC DEVICE, SERVER, AND SYSTEM**

(30) Priority: 13.02.2023 CN 202310140161
(71) Applicant: Huawei Cloud Computing Technologies Co., Ltd., Guiyang, Guizhou 550025 (CN)
(72) Inventor: ZHENG, Ya, Guiyang, Guizhou 550025 (CN); LI, Zhilong, Guiyang, Guizhou 550025 (CN); YANG, Yuanping, Guiyang, Guizhou 550025 (CN); HU, Zhikun, Guiyang, Guizhou 550025 (CN); WEI, Ji, Guiyang, Guizhou 550025 (CN)
(74) Representative: Isarpatent
(86) International application number: PCT/CN2023/126194
(87) International publication number: WO 2024/169220

(57) **Abstract**

Embodiments of this application provide a synchronous display method, an electronic device, a server, and a system. The method is applied to a first electronic device. The method includes: receiving first indication information including an attribute parameter of a newly added material in a scene presented by a second electronic device; and displaying, based on the first indication information, the newly added material in a scene presented by the first electronic device, where the newly added material has the same attribute parameter in the scene presented by the second electronic device and the scene presented by the first electronic device. The scene presented by the first electronic device and the scene presented by the second electronic device are augmented reality scenes. In addition to the newly added material, materials in the scene presented by the first electronic device and the scene presented by the second electronic device are at least partially the same. Alternatively, the scene presented by the first electronic device is a virtual reality scene/an augmented reality scene, and the scene presented by the second electronic device is an augmented reality scene/a virtual reality scene corresponding to the scene presented by the first electronic device. This helps improve user experience.

## Description

This application claims priority to Chinese Patent Application No. 202310140161.X, filed with the China National Intellectual Property Administration on February 13, 2023 and entitled "SYNCHRONOUS DISPLAY METHOD, ELECTRONIC DEVICE, SERVER, AND SYSTEM", which is incorporated herein by reference in its entirety.

### TECHNICAL FIELD

Embodiments of this application relate to the terminal field, and more specifically, to a synchronous display method, an electronic device, a server, and a system.

### BACKGROUND

With development of communication technologies, a virtual reality (virtual reality, VR) technology and an augmented reality (augmented reality, AR) technology gradually emerge. However, applications or devices on different platforms need to comply with application programming interfaces (application programming interface, API) provided by corresponding platform vendors. Consequently, when each application or device runs on another platform, secondary development needs to be performed. To implement across-platform running of the applications and devices, open extended reality (open extended reality, Open XR) emerges. XR includes mixed reality (Mixed Reality, MR), VR, and AR.

However, because performance of electronic devices is different, different electronic devices also have different capabilities in using VR technologies and AR technologies. For example, an electronic device with good hardware performance has good 3D modeling effect. Therefore, a VR technology is usually used in this type of electronic device. A portable electronic device is equipped with a depth sensor. Therefore, an AR technology is usually used in this type of electronic device. Therefore, synchronous editing cannot be implemented for a plurality of scenes corresponding to a same real scene, resulting in poor user experience.

### SUMMARY

Embodiments of this application provide a synchronous display method, an electronic device, a server, and a system. According to the method, synchronous editing can be implemented for a same scene. This helps improve user experience.

According to a first aspect, a synchronous display method is provided, including: A first electronic device receives first indication information, where the first indication information includes an attribute parameter of a newly added material in a scene presented by a second electronic device. The first electronic device displays, based on the first indication information, the newly added material in a scene presented by the first electronic device, where the attribute parameter of the newly added material in the scene presented by the second electronic device is the same as an attribute parameter of the newly added material in the scene presented by the first electronic device. The scene presented by the first electronic device and the scene presented by the second electronic device are augmented reality scenes, and in addition to the newly added material, materials in the scene presented by the first electronic device and the scene presented by the second electronic device are at least partially the same; or the scene presented by the first electronic device is a virtual reality scene, and the scene presented by the second electronic device is an augmented reality scene corresponding to the scene presented by the first electronic device; or the scene presented by the first electronic device is an augmented reality scene, and the scene presented by the second electronic device is a virtual reality scene corresponding to the scene presented by the first electronic device.

In this embodiment of this application, after a user adds the material to the scene presented by the second electronic device, the first electronic device may receive the first indication information, where the first indication information indicates the attribute parameter of the newly added material in the scene presented by the second electronic device. In this way, the first electronic device can synchronously display, based on the first indication information, the newly added material in the scene presented by the first electronic device. When designing the scene presented by the second electronic device, the user may complete synchronous design of a scene that corresponds to a same real scene with the scene presented by the second electronic device and that is presented by the first electronic device. This helps improve user experience.

With reference to the first aspect, in some implementations of the first aspect, after displaying the newly added material in the scene presented by the first electronic device, the method further includes: The first electronic device receives second indication information, where the second indication information includes a changed attribute parameter of the newly added material in the scene presented by the second electronic device. The first electronic device adjusts, based on the second indication information, the newly added material in the scene presented by the first electronic device, where an adjusted attribute parameter of the newly added material in the scene presented by the first electronic device is the same as the changed attribute parameter of the newly added material in the scene presented by the second electronic device.

In the foregoing embodiment, after the user changes the attribute parameter of the newly added material in the scene presented by the second electronic device, the first electronic device may receive the second indication information, where the second indication information indicates the changed attribute parameter of the newly added material in the scene presented by the second electronic device. In this way, the first electronic device can synchronously change, based on the second indication information, the newly added material in the scene presented by the first electronic device. This helps further improve user experience.

With reference to the first aspect, in some implementations of the first aspect, after displaying the newly added material in the scene presented by the first electronic device, the method further includes: The first electronic device receives third indication information when the newly added material is in an editing state in the scene presented by the second electronic device. The first electronic device locks, based on the third indication information, an editing state of the newly added material in the scene presented by the first electronic device.

In the foregoing embodiment, when the newly added material is in the editing state in the scene presented by the second electronic device, the first electronic device may receive the third indication information, and then the first electronic device may lock, based on the third indication information, the editing state of the newly added material in the scene presented by the first electronic device. In this way, a plurality of users can be prevented from simultaneously editing a newly added material separately corresponding to a plurality of scenes (corresponding to a same real scene), to avoid disorder.

With reference to the first aspect, in some implementations of the first aspect, the attribute parameter includes at least one of a name, a size, a location, and a direction.

With reference to the first aspect, in some implementations of the first aspect, a distance between a geographical location of the scene presented by the first electronic device and a geographical location of the scene presented by the second electronic device is less than or equal to a first threshold.

With reference to the first aspect, in some implementations of the first aspect, a distance between the second electronic device and the first electronic device is less than or equal to a second threshold.

With reference to the first aspect, in some implementations of the first aspect, the first indication information, the second indication information, and/or the third indication information are/is information sent by a server.

According to a second aspect, a synchronous display method is provided, including: A server sends first indication information to a first electronic device, where the first indication information indicates the first electronic device to synchronously display a newly added material in a presented scene, the first indication information includes an attribute parameter of the newly added material in a scene presented by a second electronic device, and the attribute parameter of the newly added material in the scene presented by the second electronic device is the same as an attribute parameter of the newly added material in the scene presented by the first electronic device. The scene presented by the first electronic device and the scene presented by the second electronic device are augmented reality scenes, and in addition to the newly added material, materials in the scene presented by the first electronic device and the scene presented by the second electronic device are at least partially the same; or the scene presented by the first electronic device is a virtual reality scene, and the scene presented by the second electronic device is an augmented reality scene corresponding to the scene presented by the first electronic device; or the scene presented by the first electronic device is an augmented reality scene, and the scene presented by the second electronic device is a virtual reality scene corresponding to the scene presented by the first electronic device.

With reference to the second aspect, in some implementations of the second aspect, before the server sends the first indication information to the first electronic device, the method further includes: The server receives first information from the second electronic device, where the first information indicates the attribute parameter of the newly added material in the scene presented by the second electronic device.

With reference to the second aspect, in some implementations of the second aspect, the first information further indicates a geographical location of the scene presented by the second electronic device, and before the server sends the first indication information to the first electronic device, the method further includes: The server determines the first electronic device based on the geographical location of the scene presented by the second electronic device, where a distance between a geographical location of the scene presented by the first electronic device and the geographical location of the scene presented by the second electronic device is less than or equal to a first threshold.

With reference to the second aspect, in some implementations of the second aspect, the first information further indicates a geographical location of the second electronic device, and that the server determines the first electronic device based on the geographical location of the scene presented by the second electronic device includes: The server determines the first electronic device based on the geographical location of the scene presented by the second electronic device and the geographical location of the second electronic device, where a distance between the first electronic device and the second electronic device is less than or equal to a second threshold.

With reference to the second aspect, in some implementations of the second aspect, after the server sends the first indication information to the first electronic device, the method further includes: The server sends second indication information to the first electronic device, where the second indication information indicates to synchronously adjust the newly added material in the scene presented by the first electronic device, the second indication information includes a changed attribute parameter of the newly added material in the scene presented by the second electronic device, and an adjusted attribute parameter of the newly added material in the scene presented by the first electronic device is the same as the changed attribute parameter of the newly added material in the scene presented by the second electronic device.

With reference to the second aspect, in some implementations of the second aspect, before the server sends the second indication information to the first electronic device, the method further includes: The server receives second information from the second electronic device, where the second information indicates the changed attribute parameter of the newly added material in the scene presented by the second electronic device.

With reference to the second aspect, in some implementations of the second aspect, after the server sends the first indication information to the first electronic device, the method further includes: The server sends third indication information to the first electronic device, where the third indication information indicates to lock an editing state of the newly added material in the scene presented by the first electronic device.

With reference to the second aspect, in some implementations of the second aspect, before the server sends the third indication information to the first electronic device, the method further includes: The server receives third information from the second electronic device, where the third information indicates that the newly added material is in the editing state in the scene presented by the second electronic device.

With reference to the second aspect, in some implementations of the second aspect, the attribute parameter includes at least one of a name, a size, a location, and a direction.

For technical effect of the second aspect and the possible implementations, refer to the related descriptions of the first aspect. Details are not described herein again.

According to a third aspect, a system is provided. The system includes a first electronic device and a server. The server is configured to send first indication information to the first electronic device, where the first indication information includes an attribute parameter of a newly added material in a scene presented by a second electronic device. The first electronic device is configured to display, based on the first indication information, the newly added material in a scene presented by the first electronic device, where the attribute parameter of the newly added material in the scene presented by the second electronic device is the same as an attribute parameter of the newly added material in the scene presented by the first electronic device. The scene presented by the first electronic device and the scene presented by the second electronic device are augmented reality scenes, and in addition to the newly added material, materials in the scene presented by the first electronic device and the scene presented by the second electronic device are at least partially the same; or the scene presented by the first electronic device is a virtual reality scene, and the scene presented by the second electronic device is an augmented reality scene corresponding to the scene presented by the first electronic device; or the scene presented by the first electronic device is an augmented reality scene, and the scene presented by the second electronic device is a virtual reality scene corresponding to the scene presented by the first electronic device.

In this embodiment of this application, after a user adds the material to the scene presented by the second electronic device, the server sends the first indication information to the first electronic device, where the first indication information indicates the attribute parameter of the newly added material in the scene presented by the second electronic device. In this way, after receiving the first indication information, the first electronic device can synchronously display, based on the first indication information, the newly added material in the scene presented by the first electronic device. When designing the scene presented by the second electronic device, the user may complete synchronous design of a scene that corresponds to a same real scene with the scene presented by the second electronic device and that is presented by the first electronic device. This helps improve user experience.

With reference to the third aspect, in some implementations of the third aspect, the system further includes the second electronic device. The second electronic device is further configured to: in response to detecting a first operation in the scene presented by the second electronic device, display the newly added material in the scene presented by the second electronic device. The second electronic device is further configured to send first information to the server, where the first information indicates the attribute parameter of the newly added material in the scene presented by the second electronic device. The server is further specifically configured to send the first indication information to the first electronic device after receiving the first information.

With reference to the third aspect, in some implementations of the third aspect, the first information further indicates a geographical location of the scene presented by the second electronic device. The server is further configured to: before sending the first indication information to the first electronic device, determine the first electronic device based on the geographical location of the scene presented by the second electronic device, where a distance between a geographical location of the scene presented by the first electronic device and the geographical location of the scene presented by the second electronic device is less than or equal to a first threshold.

With reference to the third aspect, in some implementations of the third aspect, the first information further indicates a geographical location of the second electronic device. The server is further specifically configured to determine the first electronic device based on the geographical location of the scene presented by the second electronic device and the geographical location of the second electronic device, where a distance between the first electronic device and the second electronic device is less than or equal to a second threshold.

With reference to the third aspect, in some implementations of the third aspect, the server is further configured to send second indication information to the first electronic device after sending the first indication information to the first electronic device, where the second indication information indicates to synchronously adjust the newly added material in the scene presented by the first electronic device, and the second indication information includes a changed attribute parameter of the newly added material in the scene presented by the second electronic device.

With reference to the third aspect, in some implementations of the third aspect, the second electronic device is further configured to: in response to detecting a second operation in the scene presented by the second electronic device, change the attribute parameter of the newly added material in the scene presented by the second electronic device. The second electronic device is further configured to send second information to the server, where the second information indicates the changed attribute parameter of the newly added material in the scene presented by the second electronic device. The server is further specifically configured to send the second indication information to the first electronic device after receiving the second information.

With reference to the third aspect, in some implementations of the third aspect, the first electronic device is further configured to adjust, based on the second indication information, the newly added material in the scene presented by the first electronic device, where an adjusted attribute parameter of the newly added material in the scene presented by the first electronic device is the same as the changed attribute parameter of the newly added material in the scene presented by the second electronic device.

With reference to the third aspect, in some implementations of the third aspect, the server is further configured to send third indication information to the first electronic device after sending the first indication information to the first electronic device, where the third indication information indicates to lock an editing state of the newly added material in the scene presented by the first electronic device.

With reference to the third aspect, in some implementations of the third aspect, the second electronic device is further configured to send third information to the server in response to detecting a third operation on the newly added material, where the third information indicates that the newly added material is in an editing state in the scene presented by the second electronic device. The server is further specifically configured to send the third indication information to the first electronic device after receiving the third information.

With reference to the third aspect, in some implementations of the third aspect, the first electronic device is further configured to lock, based on the third indication information, the editing state of the newly added material in the scene presented by the first electronic device.

With reference to the third aspect, in some implementations of the third aspect, the attribute parameter includes at least one of a name, a size, a location, and a direction.

For technical effect that is not described in the third aspect and the possible implementations, refer to the related descriptions of the first aspect. Details are not described herein again.

According to a fourth aspect, a first electronic device is provided, including one or more processors, one or more memories, and one or more programs. The one or more programs are stored in the memory. When the configured device runs, the processor executes the one or more programs stored in the memory, so that the device performs the method in any one of the first aspect and the possible implementations of the first aspect.

According to a fifth aspect, a server is provided, including one or more processors, one or more memories, and one or more programs. The one or more programs are stored in the memory. When the server runs, the processor executes the one or more programs stored in the memory, so that the device performs the method in any one of the second aspect and the possible implementations of the second aspect.

According to a sixth aspect, a readable storage medium is provided, including instructions. When the instructions are run on a first electronic device, the device is enabled to perform the method in any one of the first aspect and the possible implementations of the first aspect.

According to a seventh aspect, a readable storage medium is provided, including instructions. When the instructions are run on a server, the device is enabled to perform the method in any one of the second aspect and the possible implementations of the second aspect.

According to an eighth aspect, a program product is provided. When the program product runs on a first electronic device, the first electronic device is enabled to perform the method in any one of the first aspect and the possible implementations of the first aspect.

According to a ninth aspect, a program product is provided. When the program product runs on a server, the server is enabled to perform the method in any one of the second aspect and the possible implementations of the second aspect.

According to a tenth aspect, a chip is provided, including at least one processor and an interface circuit. The interface circuit is configured to provide program instructions or data for the at least one processor, and the at least one processor is configured to execute the program instructions, to implement the method in any one of the first aspect, the second aspect, and the possible implementations of the first aspect and the second aspect.

It may be understood that the foregoing provided device, readable storage medium, and program product are all configured to perform the corresponding method provided above. Therefore, for technical effect that can be achieved by the provided device, readable storage medium, and program product, refer to technical effect in the corresponding method provided above. Details are not described herein again.

### BRIEF DESCRIPTION OF DRAWINGS

FIG. 1 is a diagram of a structure of an electronic device according to an embodiment of this application;
FIG. 2 is a block diagram of a software structure of a device according to an embodiment of this application;
FIG. 3 is an example diagram of an application scenario according to an embodiment of this application;
FIG. 4(a) to FIG. 4(e) are diagrams of a group of GUIs according to an embodiment of this application;
FIG. 5 is an example diagram of another application scenario according to an embodiment of this application;
FIG. 6(a) to FIG. 8(b) all are diagrams of a group of GUIs according to an embodiment of this application;
FIG. 9 is an example diagram of still another application scenario according to an embodiment of this application;
FIG. 10(a)-1 to FIG. 10(c)-3 are diagrams of a group of GUIs according to an embodiment of this application;
FIG. 11 is a schematic flowchart of a synchronous display method according to an embodiment of this application;
FIG. 12 is a schematic flowchart of another synchronous display method according to an embodiment of this application;
FIG. 13 is a block diagram of a device according to an embodiment of this application; and
FIG. 14 is a block diagram of another device according to an embodiment of this application.

### DESCRIPTION OF EMBODIMENTS

The following describes technical solutions of embodiments in this application with reference to accompanying drawings.

A configured device in embodiments of this application includes user equipment, an access terminal, a subscriber unit, a subscriber station, a mobile station, a mobile console, a remote station, a remote terminal, a mobile device, a terminal, a wireless communication device, a user agent, or a user apparatus. The configured device may further include a cellular phone, a cordless phone, a session initiation protocol phone, a personal digital assistant, a handheld device with a wireless communication function, a computing device, another processing device connected to a wireless modem, a vehicle-mounted device, a wearable device (for example, a Bluetooth headset or a smartwatch), a device in a future 5G network, a device in a future evolved public land mobile communication network, or the like. A to-be-configured device includes but is not limited to a home device (for example, a smart lock, a smart lamp, or a smart peephole). A router includes but is not limited to a home router and an enterprise router. This is not limited in embodiments of this application.

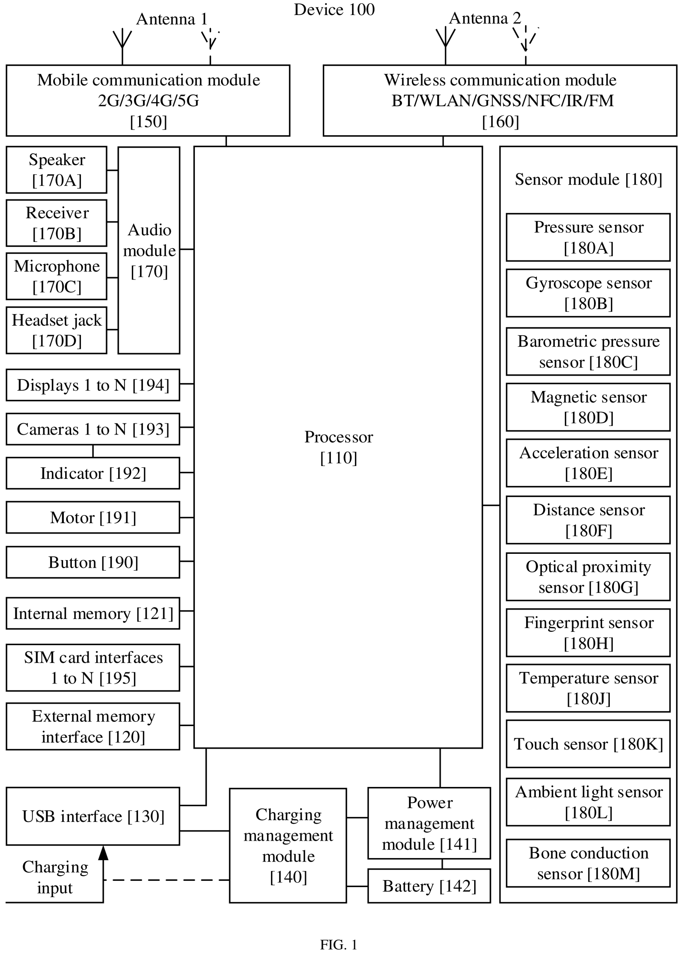

For example, FIG. 1 is a diagram of a structure of a device 100 according to an embodiment of this application.

For example, as shown in FIG. 1, the device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the device 100. In some other embodiments of this application, the device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of this application is merely an example for description, and does not constitute a limitation on a structure of the device 100. In some other embodiments of this application, the device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the device 100. The charging management module 140 may further supply power to the device through the power management module 141 when charging the battery 142. The power management module 141 is configured to connect the battery 142 and the charging management module 140 to the processor 110.

A wireless communication function of the device 100 may be implemented through the antenna 1, the antenna 2, the mobile communication module 150, the wireless communication module 160, the modem processor, the baseband processor, and the like.

The mobile communication module 150 may provide a wireless communication solution that is applied to the device 100 and that includes 2G/3G/4G/5G.

In some embodiments, the modem processor may be an independent component. In some other embodiments, the modem processor may be independent of the processor 110, and is disposed in a same device with the mobile communication module 150 or another functional module.

The wireless communication module 160 may provide a wireless communication solution that is applied to the device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the device 100, the antenna 1 and the mobile communication module 150 are coupled, and the antenna 2 and the wireless communication module 160 are coupled, so that the device 100 can communicate with a network and another device by using a wireless communication technology.

The device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, and the like. The display 194 includes a display panel. In some embodiments, the device 100 may include one or N displays 194, where N is a positive integer greater than 1.

The device 100 may implement a photographing function through the ISP, the camera 193, the video codec, the GPU, the display 194, the application processor, and the like.

The external memory interface 120 may be configured to connect to an external memory card, for example, a micro SD card, to extend a storage capability of the device 100. The internal memory 121 may be configured to store computer-executable program code. The executable program code includes instructions. The processor 110 runs the instructions stored in the internal memory 121, to perform various function applications and data processing of the device 100.

The device 100 may implement an audio function through the audio module 170, the speaker 170A, the receiver 170B, the microphone 170C, the headset jack 170D, the application processor, and the like. The audio module 170 is configured to convert digital audio information into an analog audio signal for output, and is also configured to convert an analog audio input into a digital audio signal. The speaker 170A, also referred to as a "horn", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. The gyroscope sensor 180B may be configured to determine a motion posture of the device 100. The barometric pressure sensor 180C is configured to measure barometric pressure. The acceleration sensor 180E may detect magnitudes of accelerations of the device 100 in all directions (usually on three axes). The distance sensor 180F is configured to measure a distance. The fingerprint sensor 180H is configured to collect a fingerprint. The touch sensor 180K is also referred to as a "touch panel". The touch sensor 180K may be disposed in the display 194, and the touch sensor 180K and the display 194 form a touchscreen, which is also referred to as a "touch screen". The bone conduction sensor 180M may obtain a vibration signal.

The button 190 includes a power button, a volume button, and the like. The motor 191 may generate a vibration prompt. The indicator 192 may be an indicator, and may be configured to indicate a charging state and a power change, or may be configured to indicate a message, a missed call, a notification, and the like. The SIM card interface 195 is configured to connect to a SIM card.

A software system of the device 100 shown in FIG. 1 may use a layered architecture, an event-driven architecture, a microkernel architecture, a micro service architecture, or a cloud architecture.

The software system is not limited in embodiments of this application. For example, the software system may be an Android^{®} system, an iOS^{®} system, or a HarmonyOS^{®} system.

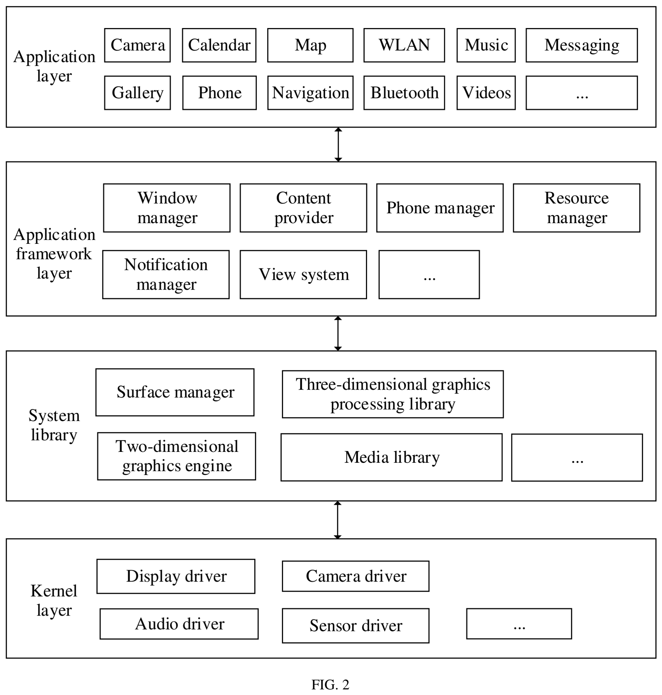

With reference to FIG. 2, the following describes the software structure of the device 100 by using the Android^{®} system with the layered architecture as an example.

FIG. 2 is a block diagram of the software structure of the device 100 according to this embodiment of this application. In the layered architecture, software is divided into several layers, and each layer has a clear role and task. The layers communicate with each other through a software interface. In some embodiments, the Android system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messaging.

The application framework layer provides an API and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, an audio, calls that are made and answered, a browsing history, a bookmark, an address book, and the like.

The view system includes visual controls, such as a text display control and an image display control. The view system may be configured to construct an application. A display interface may include one or more views. For example, a display interface including an SMS message notification icon may include a text display view and a picture display view.

The phone manager is used to provide a communication function for the device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The displayed notification information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the device vibrates, or an indicator blinks.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, and MP3.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes a synchronous display method provided in embodiments of this application in detail with reference to FIG. 3 to FIG. 10(c)-3.

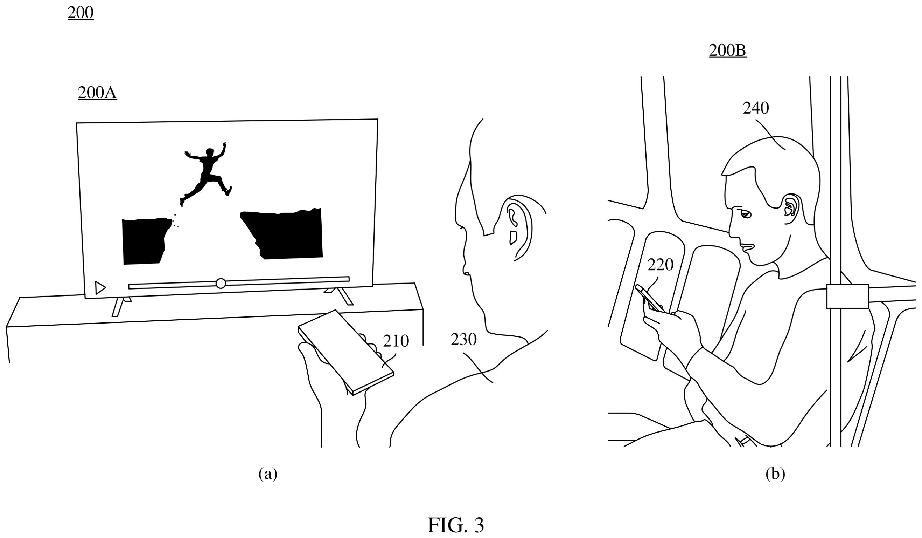

FIG. 3 is an example diagram of an application scenario 200 according to an embodiment of this application.

As shown in FIG. 3, the application scenario 200 includes a home scenario 200A and a travel scenario 200B. As shown in (a) in FIG. 3, the home scenario 200A includes a mobile phone 210 and a user 230 whose is using the mobile phone 210. As shown in (b) in FIG. 3, the travel scenario 200B includes a mobile phone 220 and a user 240 who is using the mobile phone 220. A first application is installed on each of the mobile phone 210 and the mobile phone 220, and the first application is mainly used for VR design. In this case, the user 230 designs a first VR scene on the mobile phone 210 through the first application, and the user 240 also designs a first VR scene on the mobile phone 220 through the first application.

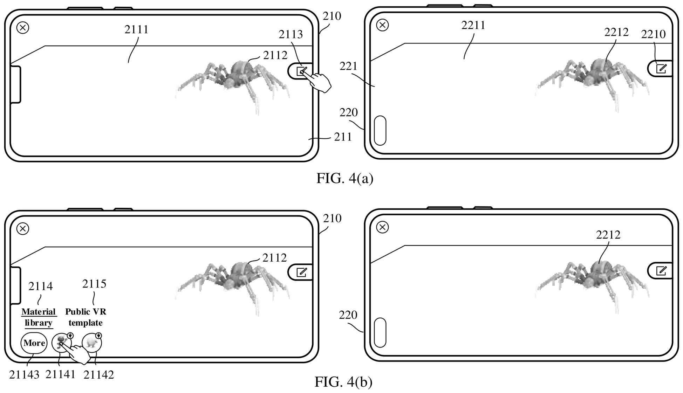

When the user 230 edits the first VR scene displayed on the mobile phone 210, changes of graphical user interfaces (graphical user interfaces, GUIs) of the mobile phone 210 and the mobile phone 220 are shown in FIG. 4(a) to FIG. 4(e).

FIG. 4(a) to FIG. 4(e) are diagrams of a group of GUIs of the mobile phone 210 and the mobile phone 220 according to this embodiment of this application.

As shown in FIG. 4(a), the mobile phone 210 displays a VR scene interface 211 of the first application, and the VR scene interface 211 is an interface of the first VR scene. The VR scene interface 211 may include elements, for example, a table 2111 and a spider 2112 shown in FIG. 4(a), that constitute the first VR scene. The VR scene interface 211 may further include a control 2113 used to edit the first VR scene.

In addition, as shown in FIG. 4(a), the mobile phone 220 displays a VR scene interface 221 of the first application, and the VR scene interface 221 is also an interface of the first VR scene. The VR scene interface 221 may also include elements, for example, a table 2211 and a spider 2212 shown in FIG. 4(a), that constitute the first VR scene. The VR scene interface 221 may further include a control 2210 used to edit the first VR scene.

After the mobile phone 210 detects an operation of tapping the control 2113 by the user 230, the VR scene interface 211 may further display a control used to edit an element in the first VR scene. For example, as shown in FIG. 4(b), the VR scene interface 211 may further include a material library control 2114. In this case, content displayed on the VR scene interface 221 of the mobile phone 220 does not change.

For example, when the control used to edit the element in the first VR scene is selected, the VR scene interface 211 may further display at least one element that can be added. For example, as shown in FIG. 4(b), this material library includes a material 21141 and a material 21142.

It should be understood that FIG. 4(b) shows only two materials in the material library. A quantity of materials in the material library is not limited in embodiments of this application.

Optionally, when all materials in the material library cannot be displayed on the VR scene interface 211, the VR scene interface 221 may further include a more control 21143 used to display more materials.

Optionally, the VR scene interface 211 may further display another control. For example, as shown in FIG. 4(b), the VR scene interface 211 may further include a public VR template control 2115, and the public VR template control 2115 is used to change the first VR scene on the VR scene interface 211.

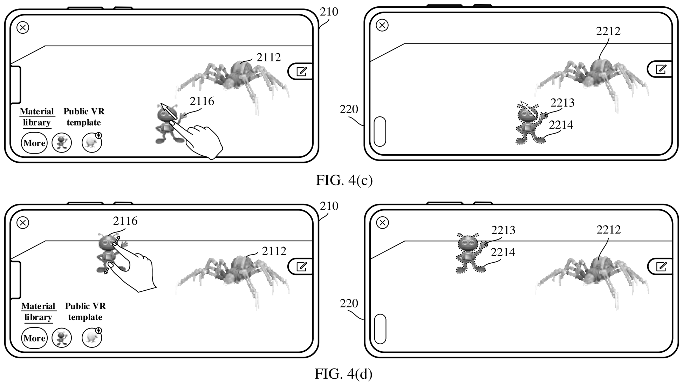

After the mobile phone 210 detects an operation of tapping the material 21141 by the user 230, as shown in FIG. 4(c), the VR scene interface 211 may further display a material 2116 added to the first VR scene. An attribute (for example, a location, a size, or a direction) of the material 2116 in the first VR scene may be a default attribute, or may be an attribute set by the user. This is not limited in this application.

In this case, the mobile phone 210 reports the attribute of the material 2116 in the first VR scene to a server (for example, cloud), and the server searches, based on a geographical location of the first VR scene (namely, a geographical location of a real scene corresponding to the first VR scene), for another device like the mobile phone 220 that is also editing the first VR scene, and sends the attribute of the material 2116 in the first VR scene to the mobile phone 220. In this way, as shown in FIG. 4(c), the mobile phone 220 synchronously displays, in the first VR scene on the VR scene interface 221, a material 2213 corresponding to the material 2116. An attribute of the material 2213 in the first VR scene of the mobile phone 220 is the same as the attribute of the material 2116 in the first VR scene of the mobile phone 210.

Optionally, if the material 2116 is in an editing state in the first VR scene of the mobile phone 210, the mobile phone 210 may further notify, through the server, the mobile phone 220 that the material 2116 is in the editing state in the first VR scene of the mobile phone 210. In this way, the mobile phone 220 can lock an editing state of the material 2213 in the first VR scene on the VR scene interface 221. In this case, the user cannot edit the material 2213. In this way, the user 240 can be prevented from editing the material 2213 in the first VR scene of the mobile phone 220 when the user 230 edits the material 2116 in the first VR scene of the mobile phone 210, to avoid disorder.

In this case, optionally, to help the user intuitively perceive that the material 2213 is in a locked state in the first VR scene on the VR scene interface 221, as shown in FIG. 4(c), the material 2213 displayed on the mobile phone 220 may include a contour line 2214. An attribute (for example, a color, a line width, or a line shape) of the contour line 2214 is not limited in embodiments of this application.

After the mobile phone 210 detects an editing operation performed on the material 2116 by the user 230, the mobile phone 210 performs, on the material 2116, an operation matching the editing operation.

For example, when the mobile phone 210 detects that the user 230 moves the material 2116 from a location shown in FIG. 4(c) to a location shown in FIG. 4(d), a location of the material 2116 on the VR scene interface 211 is correspondingly changed from the location shown in FIG. 4(c) to the location shown in FIG. 4(d).

In this case, the mobile phone 210 reports the changed location (an example of an attribute) of the material 2116 in the first VR scene to the server (for example, the cloud), and the server searches for another device like the mobile phone 220 that is also editing the first VR scene, and sends the changed location of the material 2116 in the first VR scene to the mobile phone 220. In this way, the mobile phone 220 synchronously moves the material 2213 in the first VR scene on the VR scene interface 221. For example, a location of the material 2213 on the VR scene interface 221 is correspondingly changed from a location shown in FIG. 4(c) to a location shown in FIG. 4(d). In this case, as shown in FIG. 4(d), the changed location of the material 2213 in the first VR scene of the mobile phone 220 is the same as the changed location of the material 2116 in the first VR scene of the mobile phone 210.

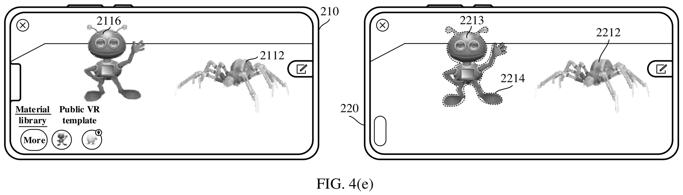

For another example, when the mobile phone 210 detects that the user 230 zooms in the material 2116 from a size shown in FIG. 4(d) to a size shown in FIG. 4(e), a size of the material 2116 on the VR scene interface 211 is correspondingly enlarged from the size shown in FIG. 4(d) to the size shown in FIG. 4(e).

In this case, the mobile phone 210 reports the changed size (an example of an attribute) of the material 2116 in the first VR scene to the server (for example, the cloud), and the server searches for another device like the mobile phone 220 that is also editing the first VR scene, and sends the changed size of the material 2116 in the first VR scene to the mobile phone 220. In this way, the mobile phone 220 synchronously zooms in the material 2213 in the first VR scene on the VR scene interface 221. For example, a size of the material 2213 on the VR scene interface 221 is correspondingly changed from a size shown in FIG. 4(c) to a size shown in FIG. 4(d). In this case, as shown in FIG. 4(d), the changed size of the material 2213 in the first VR scene of the mobile phone 220 is the same as the changed size of the material 2116 in the first VR scene of the mobile phone 210.

Through the GUIs shown in FIG. 4(a) to FIG. 4(e), when the user adds, on the mobile phone 210, the material to the first VR scene displayed on the mobile phone 210, the material is also synchronously added to the mobile phone 220 that displays the first VR scene. In addition, when the user changes the attribute of the newly added material in the first VR scene displayed on the mobile phone 210, the attribute of the material is also synchronously changed on the mobile phone 220 that displays the first VR scene. In this way, the user needs to design the first VR scene on only one device, to complete synchronous design of the first VR scene on another device that also displays the first VR scene. This helps improve user experience.

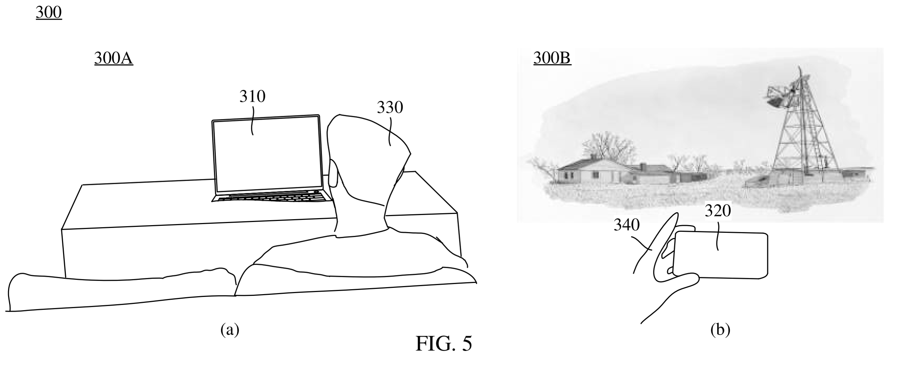

FIG. 5 is an example diagram of another application scenario 300 according to an embodiment of this application.

As shown in FIG. 5, the application scenario 300 includes an office scenario 300A and an outdoor scenario 300B. As shown in (a) in FIG. 5, the office scenario 300A includes a computer 310 and a user 330 who is using the computer 310. As shown in (b) in FIG. 5, the outdoor scenario 300B includes a mobile phone 320 and a user 340 who is using the mobile phone 320. A second application is installed on the computer 310, and the second application is mainly used for VR design. A third application is installed on the mobile phone 320, and the third application is mainly used for AR design. In this case, the user 330 designs a second VR scene on the computer 310 through the second application, and the user 340 designs, on the mobile phone 320 through the third application, a first AR scene corresponding to the second VR scene.

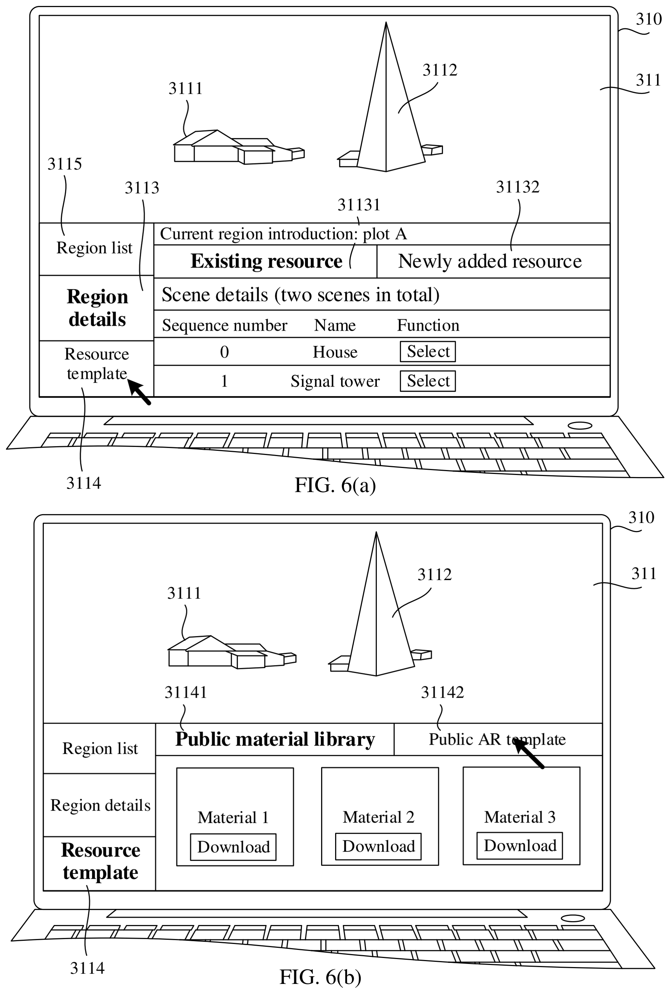

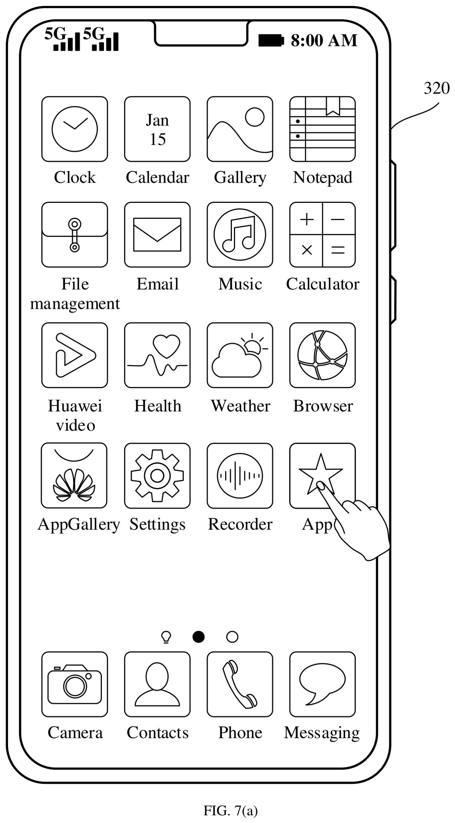

When the user 330 edits the second VR scene displayed on the computer 310, a change of a GUI of the computer 310 is shown in FIG. 6(a) to FIG. 6(i), and a change of a GUI of the mobile phone 320 is shown in FIG. 7(a) to FIG. 7(c).

FIG. 6(a) to FIG. 6(i) are diagrams of a group of GUIs of the computer 310 according to this embodiment of this application.

As shown in FIG. 6(a), the computer 310 displays a VR scene interface 311 of the second application, and the VR scene interface 311 is an interface of the second VR scene. The VR scene interface 311 may include elements, for example, a house 3111 and a signal tower 3112 shown in FIG. 6(a), that constitute the second VR scene.

For example, the VR scene interface 311 may further include a region details control 3113 used to view information about the second VR scene and a resource template control 3114 used to edit the second VR scene. Optionally, the VR scene interface 311 may further include a region list control 3115 used to view all VR scenes.

For example, when the region details control 3113 is selected, the VR scene interface 311 may further display the information related to the second VR scene. For example, as shown in FIG. 6(a), the information related to the second VR scene may include: a name of the second VR scene, namely, "Current region introduction: plot A", an existing resource control 31131 used to view an existing element in the second VR scene, and a newly added resource control 31132 used to view a newly added element in the second VR scene. Further, when the existing resource control 31131 is selected, the VR scene interface 311 may further display a scene details list (two scenes in total) of the second VR scene. The list includes a sequence number, a name, and a function of each element in the second VR scene.

After the computer 310 detects an operation of clicking the resource template control 3114 by the user 330, the VR scene interface 311 displays information related to public resources. For example, as shown in FIG. 6(b), the information related to the public resources may include a control 31141 used to view a public material library and a control 31142 used to view a public AR template. For example, when the control 31141 used to view the public material library is selected, the VR scene interface 311 may further display at least one material that can be added. For example, as shown in FIG. 6(b), the public material library includes a material 1 to a material 3.

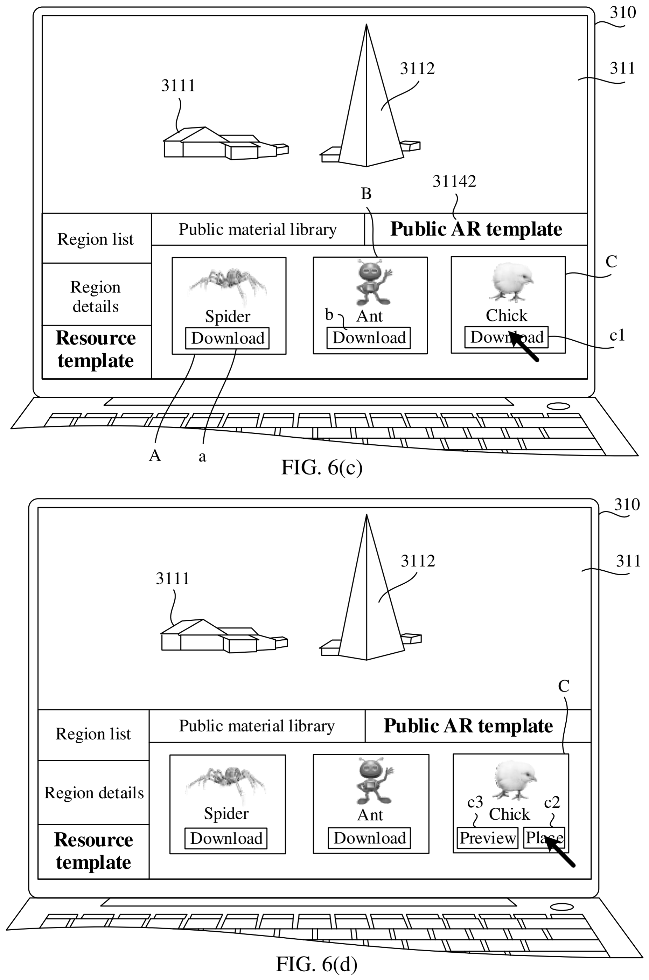

After the computer 310 detects an operation of clicking the control 31142 by the user 330, the VR scene interface 311 may further display at least one AR template and a download control used to load the AR template to the second VR scene. For example, as shown in FIG. 6(c), the VR scene interface 311 may further include a "Spider" AR template A, a download control a used to download the "Spider" AR template, an "Ant" AR template B, a download control b used to download the "Ant" AR template, a "Chick" AR template C, and a download control c1 used to download the "Chick" AR template.

After the computer 310 detects an operation of clicking the download control c1 by the user 330, as shown in FIG. 6(d), the VR scene interface 311 no longer displays the download control c1, but displays a place control c2 used to load the "Chick" AR template to the second VR scene, and a control c3 used to preview display effect of the "Chick" AR template in the second VR scene.

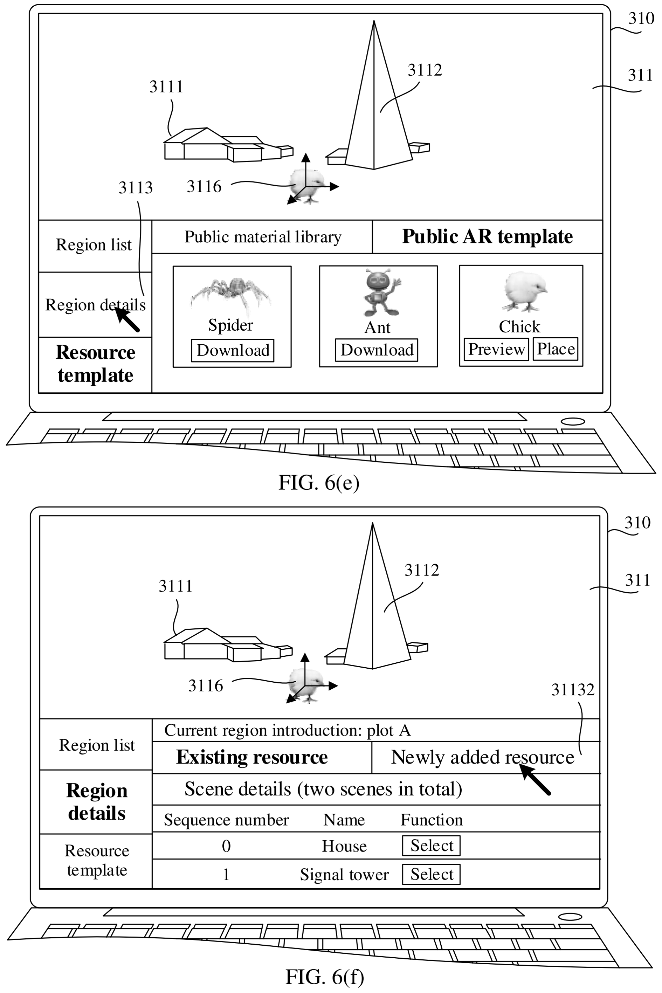

After the computer 310 detects an operation of clicking the place control c2 by the user 330, as shown in FIG. 6(e), the VR scene interface 311 may further display the "Chick" AR template 3116 added to the first VR scene. An attribute (for example, a location, a size, or a direction) of the "Chick" AR template 3116 in the second VR scene may be a default attribute, or may be an attribute set by the user. This is not limited in this application.

Optionally, as shown in FIG. 6(e), the VR scene interface 311 may further display a coordinate system of the "Chick" AR template.

After the computer 310 detects an operation of clicking the region details control 3113 by the user 330, the VR scene interface 311 displays information related to the second VR scene. For example, as shown in FIG. 6(f), the information related to the second VR scene may be the same as the information related to the second VR scene shown in FIG. 6(a). Details are not described herein again.

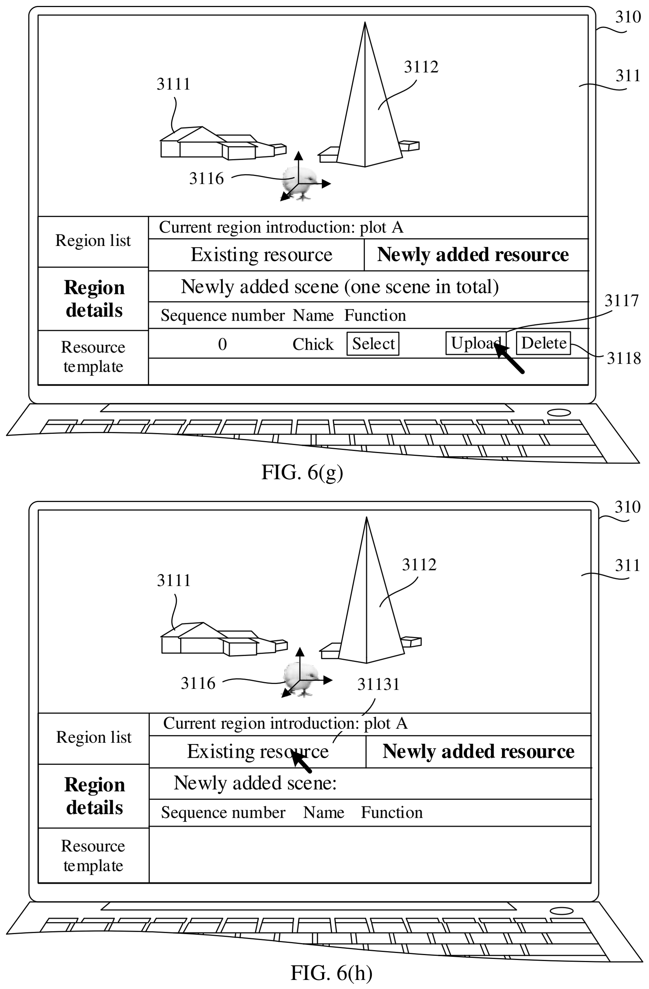

After the computer 310 detects an operation of clicking the newly added resource control 31132 by the user 330, the VR scene interface 311 may further display information related to the newly added "Chick" AR template 3116 in the second VR scene. For example, as shown in FIG. 6(g), the information related to the newly added "Chick" AR template 3116 in the second VR scene may include a newly added scene list (one scene in total). The list includes a sequence number, a name, and a function of the newly added "Chick" AR template 3116 in the second VR scene, and the list further includes an upload control 3117 used to trigger storing the newly added "Chick" AR template 3116 in the second VR scene. Optionally, the list may further include a delete control 3118 used to trigger deleting the newly added "Chick" AR template 3116 from the second VR scene.

After the computer 310 detects an operation of clicking the upload control 3117 by the user 330, the computer 310 stores the newly added "Chick" AR template 3116 in the second VR scene. In this case, as shown in FIG. 6(h), the VR scene interface 311 no longer displays the information related to the newly added "Chick" AR template 3116.

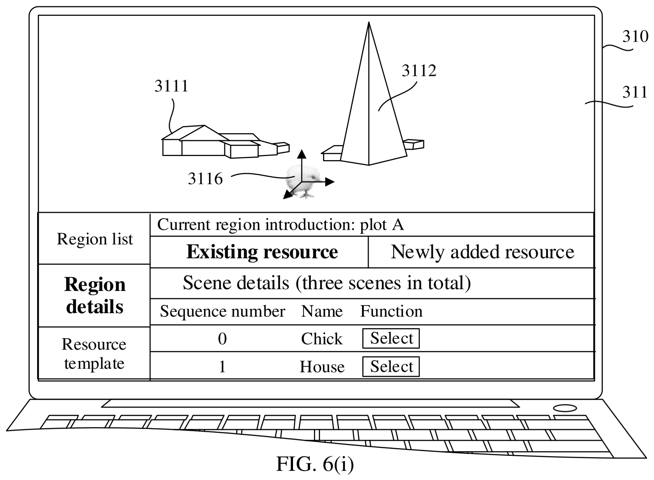

After the computer 310 detects an operation of clicking the existing resource control 31131 by the user 330, the VR scene interface 311 displays information related to the second VR scene. For example, as shown in FIG. 6(i), information related to public resources may include a scene details list (three scenes in total) of the second VR scene, and the list includes a sequence number, a name, and a function of each element of the second VR scene. A sequence number, a name, and a function of the newly added "Chick" AR template 3116 are added to the list shown in FIG. 6(i) different from FIG. 6(a).

In addition, the computer 310 reports the attribute of the "Chick" AR template 3116 in the second VR scene to the server (for example, the cloud), and the server searches, based on a geographical location of the second VR scene (namely, a geographical location of a real scene corresponding to the second VR scene), for another device like the mobile phone 320 that is also editing an AR scene corresponding to the second VR scene, and sends the attribute of the "Chick" AR template 3116 in the second VR scene to the mobile phone 320. In this way, the mobile phone 320 synchronously displays the "Chick" AR template in the AR scene corresponding to the second VR scene. An attribute of the "Chick" AR template in the first AR scene of the mobile phone 320 is the same as the attribute of the "Chick" AR template in the second VR scene of the computer 310.

FIG. 7(a) to FIG. 7(c) are diagrams of a group of GUIs of the mobile phone 320 according to this embodiment of this application.

As shown in FIG. 7(a), the mobile phone 320 displays a desktop, the desktop of the mobile phone 320 includes icons of a plurality of applications, and the plurality of applications include Clock, Calendar, Gallery, Notepad, Recorder, App 1, and the like.

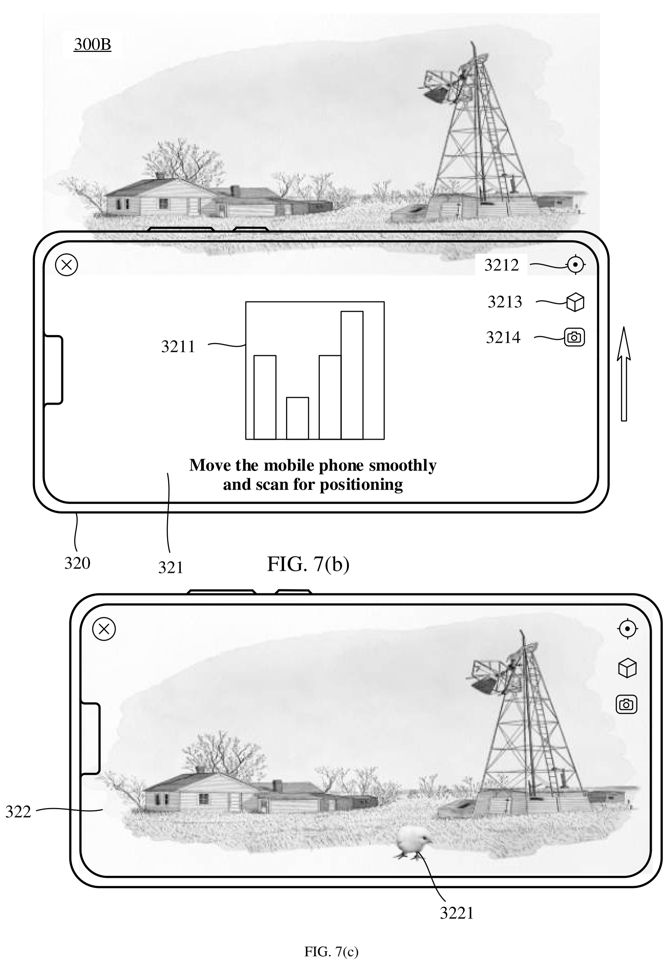

When the mobile phone 320 detects that the user taps an icon of the App 1 (an example of the third application), the mobile phone 320 may display a main interface 321 shown in FIG. 7(b).

As shown in FIG. 7(b), the main interface 321 may include a scan box 3221 and text information "Move the mobile phone smoothly and scan for positioning".

Optionally, the main interface 321 may further include at least one control. As shown in FIG. 7(b), the main interface 321 may further include a control 3212 used to trigger enabling a positioning function, a control 3213 used to trigger creating a white model, and a control 3214 used to trigger enabling a photographing function.

The user 340 may move (upward) the mobile phone 320, so that the scan box 3221 can scan a current AR scene of the mobile phone 320, and then the mobile phone 320 can identify a geographical location of the current AR scene of the mobile phone 320. In addition, the mobile phone 320 may display an AR scene interface 322 of the current AR scene (an outdoor scenario 300B) of the mobile phone 320.

As shown in FIG. 6(a) to FIG. 6(i), because the user 330 adds, through the computer 310, the "Chick" AR template 3116 to the second VR scene corresponding to the outdoor scenario 300B, when the mobile phone 320 scans and identifies, through the scan box 3221, that the current AR scene of the mobile phone 320 is the AR scene corresponding to the second VR scene, as shown in FIG. 7(c), the AR scene interface 322 synchronously displays a "Chick" AR template 3221 corresponding to the "Chick" AR template 3116 added to the second VR scene. An attribute of the "Chick" AR template 3221 in the outdoor scenario 300B (an example of the first AR scene) of the mobile phone 320 is the same as the attribute of the "Chick" AR template 3116 in the second VR scene of the computer 310.

Optionally, if the "Chick" AR template 3116 is in an editing state in the second VR scene of the computer 310, the computer 310 may further notify, through the server, the mobile phone 320 that the "Chick" AR template 3116 is in the editing state in the second VR scene of the computer 310, so that the mobile phone 320 can lock an editing state of the "Chick" AR template 3221 in the first AR scene on the AR scene interface 322. In this case, the user cannot edit the "Chick" AR template 3221. In this way, the user 340 can be prevented from editing the "Chick" AR template 3221 in the first AR scene of the mobile phone 320 when the user 330 edits the "Chick" AR template 3116 in the second VR scene of the computer 310, to avoid disorder.

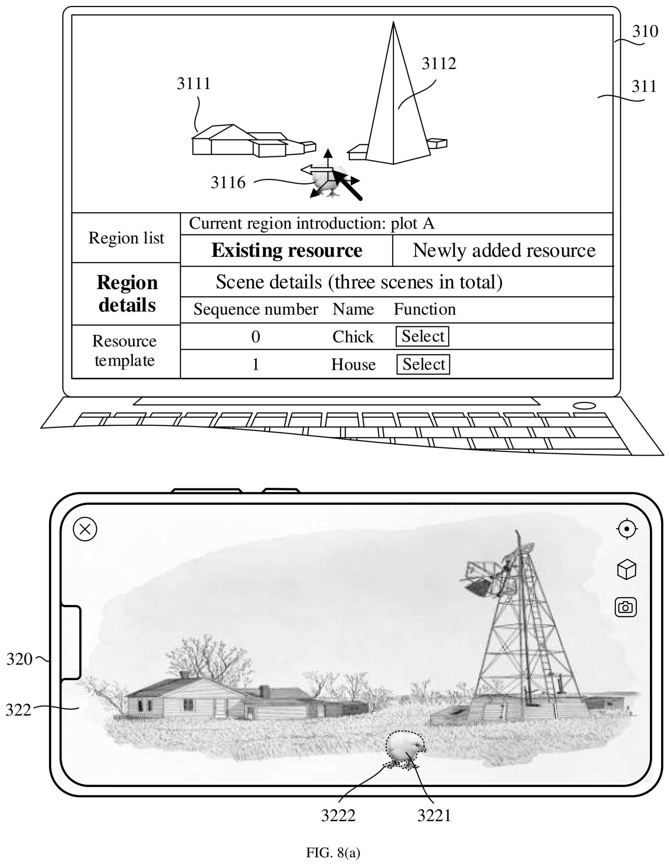

In this case, optionally, to help the user intuitively perceive that the "Chick" AR template 3221 is in a locked state in the first AR scene on the AR scene interface 322, as shown in FIG. 8(a), the "Chick" AR template 3221 displayed on the mobile phone 320 may include a contour line 3222. An attribute (for example, a color, a line width, or a line shape) of the contour line 3222 is not limited in embodiments of this application.

After the computer 310 detects an editing operation performed by the user 330 on the "Chick" AR template 3116, the computer 310 performs, on the "Chick" AR template 3116, an operation matching the editing operation.

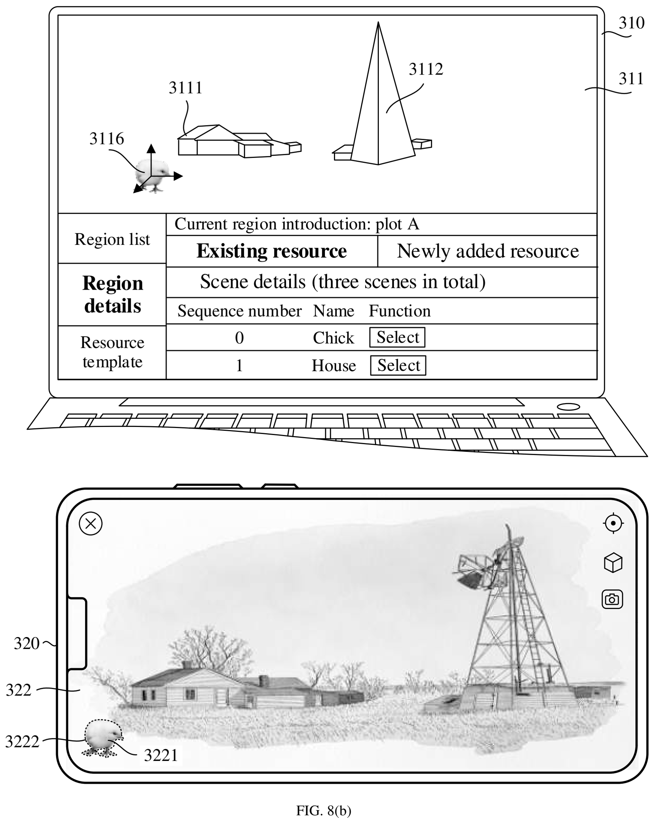

For example, when the computer 310 detects that the user 330 moves the "Chick" AR template 3116 from a location shown in FIG. 8(a) to a location shown in FIG. 8(b), a location of the "Chick" AR template 3116 on the VR scene interface 311 is correspondingly changed from the location shown in FIG. 8(a) to the location shown in FIG. 8(b).

In this case, the computer 310 reports the changed location (an example of an attribute) of the "Chick" AR template 3116 in the second VR scene to the server (for example, the cloud), and the server searches for another device like the mobile phone 320 that is editing the first AR scene corresponding to the second VR scene, and sends the changed location of the "Chick" AR template 3116 in the second VR scene to the mobile phone 320. In this way, the mobile phone 320 synchronously moves the "Chick" AR template 3221 in the first AR scene on the VR scene interface 322. For example, a location of the "Chick" AR template 3221 on the AR scene interface 322 is correspondingly changed from a location shown in FIG. 8(a) to a location shown in FIG. 8(b). In this case, as shown in FIG. 8(b), the changed location of the "Chick" AR template 3221 in the first AR scene of the mobile phone 320 is the same as the changed location of the "Chick" AR template 3116 in the second VR scene of the computer 310.

Through the GUIs shown in FIG. 5 to FIG. 8(a) and FIG. 8(b), when the user adds, on the computer 310, the material to the second VR scene displayed on the computer 310, the material is also synchronously added to the mobile phone 320 that displays the AR scene corresponding to the second VR scene. In addition, when the user changes the attribute of the newly added material in the second VR scene displayed on the computer 310, the attribute of the material is also synchronously changed on the mobile phone 320 that displays the AR scene corresponding to the second VR scene. In this way, the user needs to design the second VR scene on only one device, to complete synchronous design of the AR scene corresponding to the second VR scene on the another device that displays the AR scene corresponding to the second VR scene. This helps improve user experience.

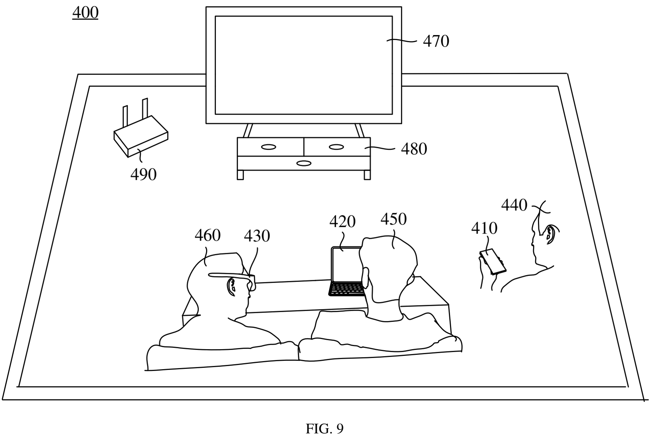

FIG. 9 is an example diagram of still another application scenario 400 according to an embodiment of this application.

As shown in FIG. 9, the application scenario 400 includes a mobile phone 410, a user 440 who is using the mobile phone 410, a tablet 420, a user 450 who is using the tablet 420, AR glasses 430, a user 460 who is using the AR glasses 430, a television 470, a television cabinet 480, and a router 490. A third application is installed on each of the mobile phone 410 and the tablet 420, and the third application is mainly used for AR design. In this case, the user 440 designs a second AR scene on the mobile phone 410 through the third application, and the user 450 also designs a second AR scene (for example, the application scenario 400) on the tablet 420 through the third application.

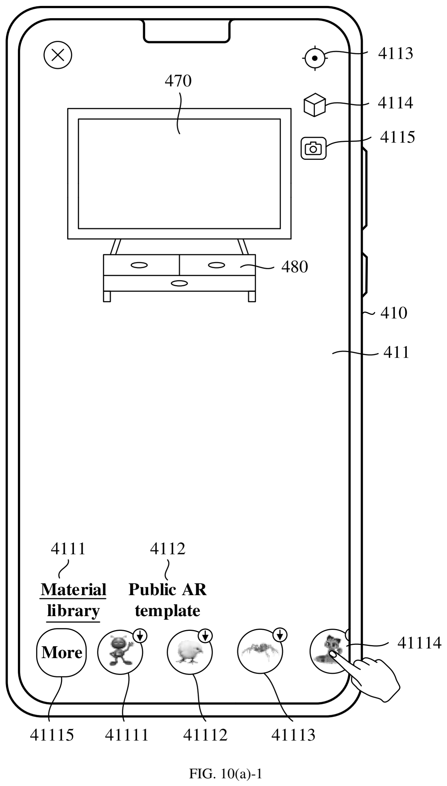

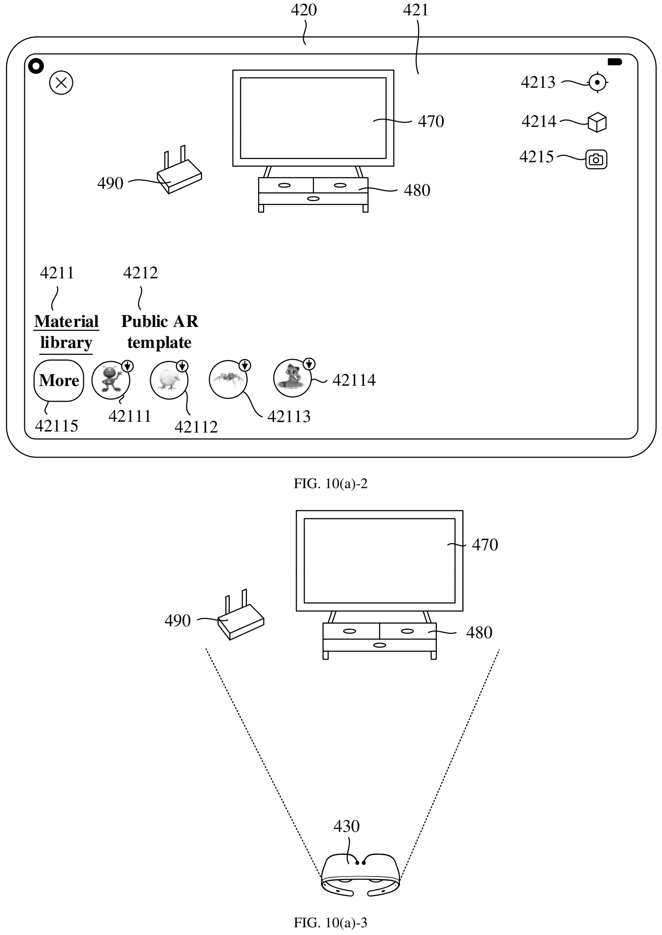

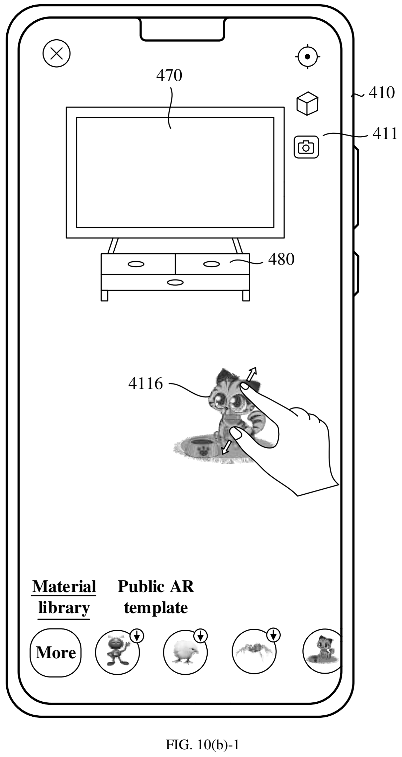

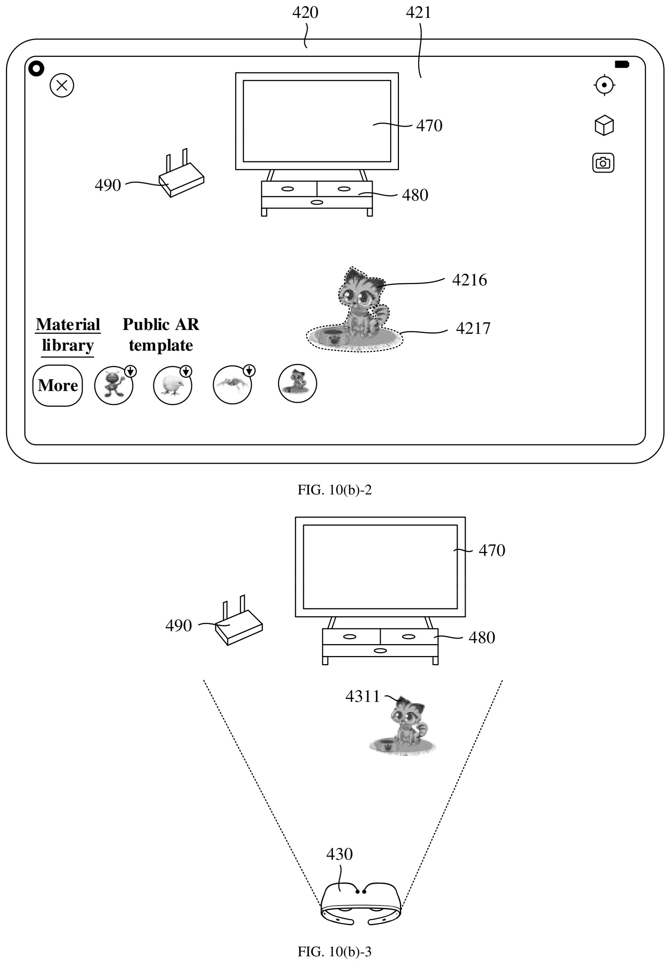

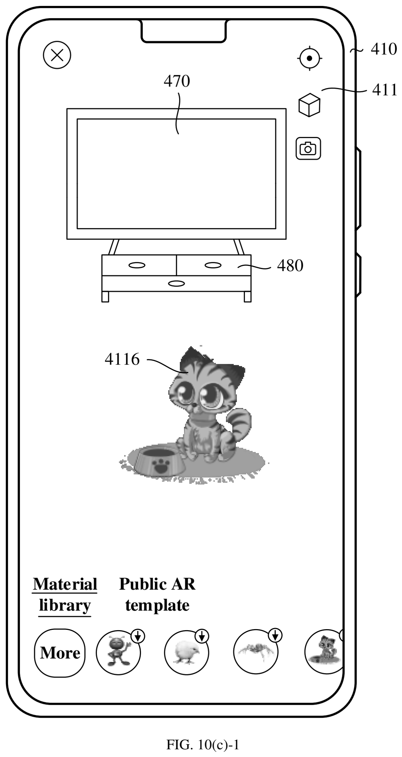

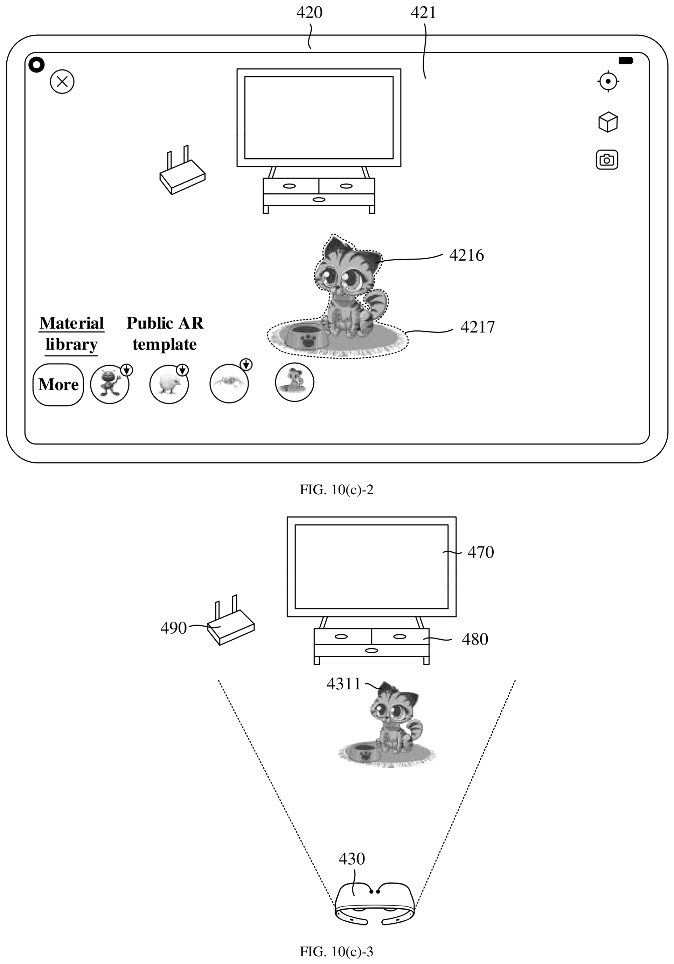

FIG. 10(a)-1 to FIG. 10(c)-3 are diagrams of a group of GUIs of the mobile phone 410, the tablet 420, and the AR glasses 430 according to this embodiment of this application.

As shown in FIG. 10(a)-1 to FIG. 10(a)-3, the mobile phone 410 displays an AR scene interface 411 of the third application, and the AR scene interface 411 is an interface of the second AR scene. The AR scene interface 411 may include elements, for example, the television 470, the television cabinet 480, and the router 490 shown in FIG. 10(a)-1 to FIG. 10(a)-3, that constitute a second VR scene.

The AR scene interface 411 may further include a control used to edit an element in the second AR scene. For example, as shown in FIG. 10(a)-1 to FIG. 10(a)-3, the AR scene interface 411 may further include a material library control 4111.

For example, when the control used to edit the element in the second AR scene is selected, the AR scene interface 411 may further display at least one element that can be added. For example, as shown in FIG. 10(a)-1 to FIG. 10(a)-3, this material library may further include a material 41111, a material 41112, a material 41113, and a material 41114.

It should be understood that FIG. 10(a)-1 to FIG. 10(a)-3 show only four materials in the material library. A quantity of materials in the material library is not limited in embodiments of this application.

Optionally, when all materials in the material library cannot be displayed on the AR scene interface 411, the AR scene interface 411 may further include a more control 41115 used to display more materials.

Optionally, the AR scene interface 411 may further display another control. For example, as shown in FIG. 10(a)-1 to FIG. 10(a)-3, the AR scene interface 411 may further include a public AR template control 4112, and the public AR template control 4112 is used to change the second AR scene on the AR scene interface 411.

Optionally, the AR scene interface 411 may further include a control 4113 used to trigger enabling a positioning function, a control 4114 used to trigger creating a white model, and a control 4115 used to trigger enabling a photographing function.

As shown in FIG. 10(a)-1 to FIG. 10(a)-3, the tablet 420 displays an AR scene interface 421 of the third application, and the AR scene interface 421 is an interface of the second AR scene. The AR scene interface 421 may include elements, for example, the television 470, the television cabinet 480, and the router 490 shown in FIG. 10(a)-1 to FIG. 10(a)-3, that constitute a second VR scene.

The AR scene interface 411 may further include a control used to edit an element in the second AR scene. For example, as shown in FIG. 10(a)-1 to FIG. 10(a)-3, the AR scene interface 421 may further include a material library control 4211.

For example, when the control used to edit the element in the second AR scene is selected, the AR scene interface 421 may further display at least one element that can be added. For example, as shown in FIG. 10(a)-1 to FIG. 10(a)-3, this material library may further include a material 42111, a material 42112, a material 42113, and a material 42114.

It should be understood that FIG. 10(a)-1 to FIG. 10(a)-3 show only four materials in the material library. A quantity of materials in the material library is not limited in embodiments of this application.

Optionally, when all materials in the material library cannot be displayed on the AR scene interface 421, the AR scene interface 421 may further include a more control 42115 used to display more materials.

Optionally, the AR scene interface 421 may further display another control. For example, as shown in FIG. 10(a)-1 to FIG. 10(a)-3, the AR scene interface 421 may further include a public AR template control 4212, and the public AR template control 4212 is used to change the second AR scene on the AR scene interface 411.

Optionally, the AR scene interface 421 may further include a control 4213 used to trigger enabling a positioning function, a control 4214 used to trigger creating a white model, and a control 4215 used to trigger enabling a photographing function.

As shown in FIG. 10(a)-1 to FIG. 10(a)-3, the user 460 may view the second AR scene through the AR glasses 430. The second AR scene may include the elements, for example, the television 470, the television cabinet 480, and the router 490 shown in FIG. 10(a)-1 to FIG. 10(a)-3, that constitute the second VR scene.

After the mobile phone 410 detects an operation of tapping the material 41114 by the user 440, as shown in FIG. 10(b)-1 to FIG. 10(b)-3, the AR scene interface 411 may further display a material 4116 added to the second AR scene. An attribute (for example, a location, a size, or a direction) of the material 4116 in the second AR scene may be a default attribute, or may be an attribute set by the user. This is not limited in this application.

In this case, the mobile phone 410 reports the attribute of the material 4116 in the second AR scene to a server (for example, cloud), and the server searches, based on a geographical location of the second AR scene (namely, a geographical location of a real scene corresponding to the second AR scene), for other devices such as the tablet 420 and the AR glasses 430 that are also located in the second AR scene, and separately sends the attribute of the material 4116 in the second AR scene to the tablet 420 and the AR glasses 430. In this way, as shown in FIG. 10(b)-1 to FIG. 10(b)-3, the tablet 420 synchronously displays, in the second AR scene on the AR scene interface 421, a material 4216 corresponding to the material 4116, where an attribute of the material 4216 in the second AR scene of the tablet 420 is the same as the attribute of the material 4116 in the second AR scene of the mobile phone 410. In addition, the user 460 may synchronously view, in the second AR scene through the AR glasses 430, a material 4311 corresponding to the material 4116, where an attribute of the material 4311 in the second AR scene viewed by the user 460 through the AR glasses 430 is the same as the attribute of the material 4116 in the second AR scene of the mobile phone 410.

Optionally, if the material 4116 is in an editing state in the second AR scene of the mobile phone 410, the mobile phone 410 may further notify, through the server, the tablet 420 and the AR glasses 430 that the material 4116 is in the editing state in the second AR scene of the mobile phone 410. In this way, the tablet 420 can lock an editing state of the material 4216 in the second AR scene of the AR scene interface 421. In this case, the user cannot edit the material 4216. In addition, the AR glasses 430 may also lock an editing state of the material 4311 in the second AR scene viewed by the user 460 through the AR glasses 430. In this way, the user 450 can be prevented from editing the material 4216 in the second AR scene of the tablet 420 when the user 440 edits the material 4116 in the second VR scene of the mobile phone 410, to avoid disorder.

In this case, optionally, to help the user intuitively perceive that the editing state of the material 4216 in the second AR scene of the AR scene interface 421 is in a locked state, as shown in FIG. 10(b)-1 to FIG. 10(b)-3, the material 4216 displayed on the tablet 420 may include a contour line 4217. An attribute (for example, a color, a line width, or a line shape) of the contour line 4217 is not limited in embodiments of this application.

After the mobile phone 410 detects an editing operation performed on the material 4116 by the user 440, the mobile phone 410 performs, on the material 4116, an operation matching the editing operation.

For example, when the mobile phone 410 detects that the user 440 zooms in the material 4116 from a size shown in FIG. 10(b)-1 to FIG. 10(b)-3 to a size shown in FIG. 10(c)-1 to FIG. 10(c)-3, a size of the material 4116 on the AR scene interface 411 is correspondingly enlarged from the size shown in FIG. 10(b)-1 to FIG. 10(b)-3 to the size shown in FIG. 10(c)-1 to FIG. 10(c)-3.

In this case, the mobile phone 410 reports the changed size (an example of an attribute) of the material 4116 in the second AR scene to the server (for example, the cloud), and the server searches for other devices such as the tablet 420 and the AR glasses 430 that are also located in the second AR scene, and separately sends the changed size of the material 4116 in the second AR scene to the tablet 420 and the AR glasses 430. In this way, the tablet 420 synchronously zooms in the material 4216 in the second AR scene of the AR scene interface 421. For example, a size of the material 4216 on the AR scene interface 421 is correspondingly changed from a size shown in FIG. 10(b)-1 to FIG. 10(b)-3 to a size shown in FIG. 10(c)-1 to FIG. 10(c)-3. In this case, as shown in FIG. 10(c)-1 to FIG. 10(c)-3, the changed size of the material 4216 in the second AR scene of the tablet 420 is the same as the changed size of the material 4116 in the second AR scene of the mobile phone 410. In addition, a size of the material 4311 synchronously viewed by the user 460 through the AR glasses 430 in the second AR scene is correspondingly changed from a size shown in FIG. 10(b)-1 to FIG. 10(b)-3 to a size shown in FIG. 10(c)-1 to FIG. 10(c)-3. In this case, as shown in FIG. 10(c)-1 to FIG. 10(c)-3, the changed size of the material 4311 in the second AR scene viewed by the user 460 through the AR glasses 430 is the same as the changed size of the material 4116 in the second AR scene of the mobile phone 410.

Through the GUIs shown in FIG. 10(a)-1 to FIG. 10(c)-3, when the user adds, on the mobile phone 410, the material to the second AR scene displayed on the mobile phone 410, the material is also synchronously added to the tablet 420 and the AR glasses 430 that are both in the second AR scene. In addition, when the user changes the attribute of the newly added material in the second AR scene displayed on the mobile phone 410, the attribute of the material is also synchronously changed on the tablet 420 and the AR glasses 430 that are both in the second AR scene. In this way, the user needs to design the second AR scene on only one device, to complete synchronous design of the second AR scene on the other devices that are both located in the second AR scene. This helps improve user experience.

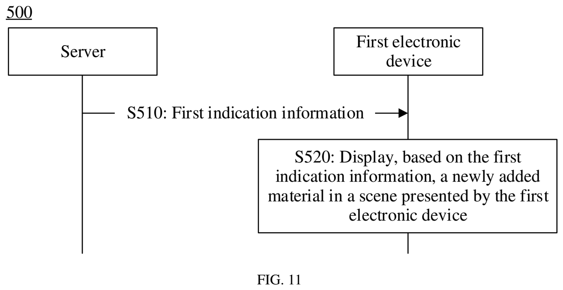

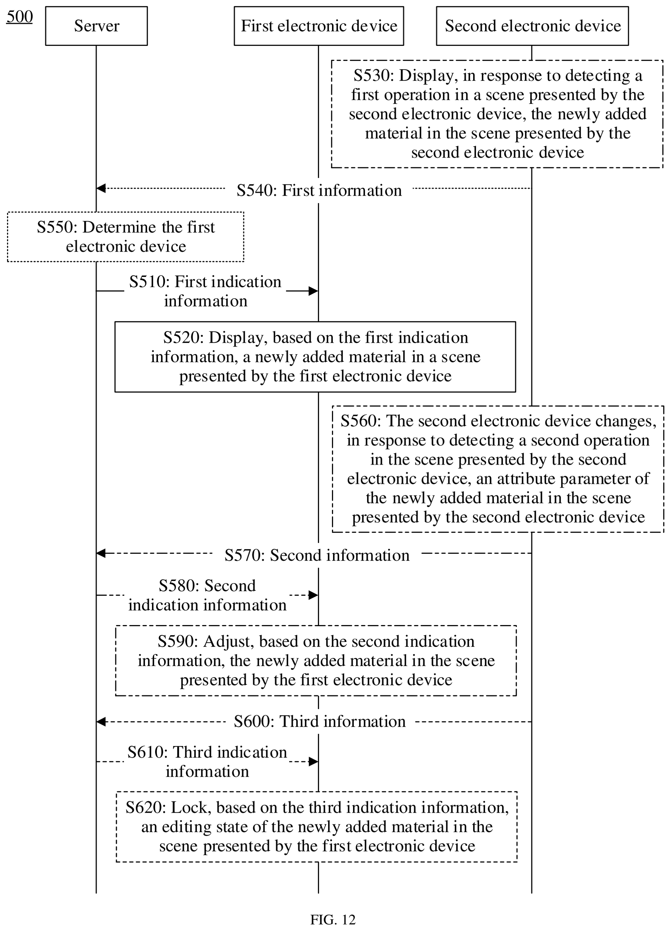

The following describes a synchronous display method 500 provided in an embodiment of this application with reference to FIG. 11 and FIG. 12.

The synchronous display method 500 may be applied to a system including a first electronic device, a second electronic device, and a server.

In an example, the first electronic device may be the mobile phone 220 shown in FIG. 3 and FIG. 4(a) to FIG. 4(e), and the second electronic device may be the mobile phone 210 shown in FIG. 3 and FIG. 4(a) to FIG. 4(e).

In another example, the first electronic device may be the mobile phone 320 shown in FIG. 5 to FIG. 8(a) and FIG. 8(b), and the second electronic device may be the computer 310 shown in FIG. 5, FIG. 6(a) to FIG. 6(i), and FIG. 8(a) and FIG. 8(b).

In another example, the first electronic device may be the tablet 420 and the AR glasses 430 shown in FIG. 9 and FIG. 10(a)-1 to FIG. 10(c)-3, and the second electronic device may be the mobile phone 410 shown in FIG. 9 and FIG. 10(a)-1 to FIG. 10(c)-3.

It should be noted that a quantity of first electronic devices is not limited in embodiments of this application. When there are two or more first electronic devices, each first electronic device needs to perform the step performed by the first electronic device in the following method 500.

For example, the server in this application may be cloud, a cloud server, or the like. The server may use a multi-language microservice framework based on a service mesh (service mesh), and mainly support cross-language service communication through a sidecar (sidecar). The server also supports a transmission control protocol (TCP, transmission control protocol) communication technology.

As shown in FIG. 11, the method 500 includes S510 and S520. The following describes S510 and S520 in detail.

S510: The server sends first indication information to the first electronic device. Correspondingly, the first electronic device receives the first indication information sent from the server.

The first indication information indicates the first electronic device to synchronously display a newly added material in a presented scene, and the first indication information includes an attribute parameter of the newly added material in a scene presented by the second electronic device.

The attribute parameter in this embodiment of this application includes at least one of a name, a size, a location, and a direction.

Materials in embodiments of this application may also be collectively referred to as digital content in a digital form, for example, other multimedia digital content such as a text, an image, an audio, a video, an animation (a two-dimensional or three-dimensional animation), and an object model (a two-dimensional or three-dimensional object model).

The scene presented by the electronic device in embodiments of this application may be understood as a scene presented by the electronic device via content displayed on a display of the electronic device. To be specific, the scene presented by the first electronic device is a scene presented by the first electronic device via content displayed on a display of the first electronic device. The scene presented by the second electronic device is a scene presented by the second electronic device via content displayed on a display of the second electronic device.

It should be noted that, in some embodiments, the first electronic device and the second electronic device may be a same electronic device. In this case, the scene presented by the first electronic device and the scene presented by the second electronic device are two scenes presented on the same electronic device, and the two scenes may be scenes presented by a same electronic device via content respectively displayed on two interfaces displayed on a display of the electronic device. The following uses an example in which the second electronic device and the first electronic device are different electronic devices for description.

In an example, the scene presented by the first electronic device and the scene presented by the second electronic device are augmented reality scenes. In addition, in addition to the newly added material, materials in the scene presented by the first electronic device and the scene presented by the second electronic device are at least partially the same.

For example, if the first electronic device is the tablet 420 or the AR glasses 430 shown in FIG. 9 and FIG. 10(a)-1 to FIG. 10(c)-3, and the second electronic device is the mobile phone 410 shown in FIG. 9 and FIG. 10(a)-1 to FIG. 10(c)-3, the scene presented by the first electronic device may be the second AR scene displayed on the AR scene interface 421 shown in FIG. 10(a)-1 to FIG. 10(c)-3 or the second AR scene that is viewed by the user 460 through the AR glasses 430 shown in FIG. 10(a)-1 to FIG. 10(c)-3, and the scene presented by the second electronic device may be the second AR scene displayed on the AR scene interface 411 shown in FIG. 10(a)-1 to FIG. 10(c)-3.

In another example, the scene presented by the first electronic device is an augmented reality scene, and the scene presented by the second electronic device is a virtual reality scene corresponding to the scene presented by the first electronic device.

For example, if the first electronic device is the mobile phone 320 shown in FIG. 5, FIG. 7(a) to FIG. 7(c), and FIG. 8(a) and FIG. 8(b), and the second electronic device is the computer 310 shown in FIG. 5, FIG. 6(a) to FIG. 6(i), and FIG. 8(a) and FIG. 8(b), the scene presented by the first electronic device may be the first AR scene displayed on the AR scene interface 322 shown in FIG. 7(a) to FIG. 7(c), and the scene presented by the second electronic device may be the second VR scene displayed on the VR scene interface 311 shown in FIG. 6(a) to FIG. 6(i). The newly added material may be the "Chick" AR template 3116 shown in FIG. 6(e).

For another example, if the second electronic device is the mobile phone 410 shown in FIG. 9 and FIG. 10(a)-1 to FIG. 10(c)-3, the first operation may be an operation of tapping the material 41114 shown in FIG. 10(a)-1 to FIG. 10(a)-3 by the user, and the newly added material may be the material 4116 shown in FIG. 10(b)-1 to FIG. 10(b)-3.

It should be noted that, in this example, in addition to the newly added material, materials in the scene presented by the first electronic device and the scene presented by the second electronic device may be different or at least partially the same. This is not limited in this application.

In still another example, the scene presented by the first electronic device is a virtual reality scene, and the scene presented by the second electronic device is an augmented reality scene corresponding to the scene presented by the first electronic device.

It should be noted that, in this example, in addition to the newly added material, materials in the scene presented by the first electronic device and the scene presented by the second electronic device may be different or at least partially the same. This is not limited in this application.

In yet another example, the scene presented by the first electronic device and the scene presented by the second electronic device are virtual reality scenes. In addition, in addition to the newly added material, materials in the scene presented by the first electronic device and the scene presented by the second electronic device are at least partially the same.

For example, if the first electronic device is the mobile phone 220 shown in FIG. 3 and FIG. 4(a) to FIG. 4(e), and the second electronic device is the mobile phone 210 shown in FIG. 3 and FIG. 4(a) to FIG. 4(e), the scene presented by the first electronic device may be the first VR scene displayed on the VR scene interface 221 shown in FIG. 4(a) to FIG. 4(e), and the scene presented by the second electronic device may be the first VR scene displayed on the VR scene interface 211 shown in FIG. 4(a) to FIG. 4(e). The newly added material may be the material 2116 shown in FIG. 4(c).

As shown in FIG. 12, before S510, the method 500 may further include S530 to S550. The following describes S530 to S550 in detail.

S530: The second electronic device displays, in response to detecting the first operation in the scene presented by the second electronic device, the newly added material in the scene presented by the second electronic device.

For example, if the second electronic device is the mobile phone 210 shown in FIG. 3 and FIG. 4(a) to FIG. 4(e), the first operation may be an operation of tapping the material 21141 shown in FIG. 4(b) by the user.

For another example, if the second electronic device is the computer 310 shown in FIG. 5, FIG. 6(a) to FIG. 6(i), and FIG. 8(a) and FIG. 8(b), the first operation may be an operation of clicking the place control c2 shown in FIG. 6(d) by the user.

For another example, if the second electronic device is the mobile phone 410 shown in FIG. 9 and FIG. 10(a)-1 to FIG. 10(c)-3, the first operation may be an operation of tapping the material 41114 shown in FIG. 10(a)-1 to FIG. 10(a)-3 by the user.

For example, to reduce time and resources that are consumed for establishing a connection between the electronic device and the server, after the user logs in to a target application on the electronic device based on an account and a password (the scene presented by the second electronic device or the scene presented by the first electronic device is a scene presented by a display interface of the target application, and the target application may be the first application or the second application described above), the electronic device sends long-link request information to the server, where the long-link request information is used to request to establish a long link with the server, that is, maintain long-term communication with the server, and the long link request information includes the account and the password for logging in to the target application by the user. The server performs, based on the account and the password, service authentication on the user who uses the electronic device. After the server successfully performs service authentication on the user, the electronic device allows the user to design a scene through the target application. In a process in which the user designs the scene through the target application, the electronic device sends, to the server in real time, content of the scene designed by the user through the target application. In other words, data, generated by the electronic device, about the target application is stored in a memory corresponding to the server, and the electronic device does not need to perform other addressing for forwarding.

In this way, after the second electronic device performs S530, the second electronic device further needs to perform S540.

S540: The second electronic device sends first information to the server. Correspondingly, the server receives the first information from the second electronic device.

The first information indicates the attribute parameter of the newly added material in the scene presented by the second electronic device. For example, the attribute parameter of the newly added material in the scene presented by the second electronic device may include at least one of a name of the newly added material, a display size of the newly added material in the scene presented by the second electronic device, a location of the newly added material in the scene presented by the second electronic device, a direction of the newly added material in the scene presented by the second electronic device, and the like.

For example, the server in this application may further automatically adjust a quantity of gateways

(gateways at a software layer of the server) based on a quantity of users (a quantity of electronic devices that keep communication with the server), to dynamically implement gateway scaling. For example, one gateway is configured for 1000 users, two gateways are configured for 2000 users, and so on. In this way, after receiving a plurality of pieces of first information corresponding to massive (that is, a plurality of) second electronic devices, the server may massively forward the first information from the second electronic devices, to be specific, send the plurality of pieces of first indication information corresponding to the plurality of second electronic devices to the first electronic device.

S550: The server determines the first electronic device.

For example, the server includes N storage regions, and each of the N storage regions corresponds to one hash value. The server calculates, based on the second electronic device and/or a geographical location of the scene presented by the second electronic device, a hash value corresponding to the second electronic device and/or a hash value corresponding to the scene presented by the second electronic device, and maps, to one region of the server, the hash value corresponding to the second electronic device and/or the hash value corresponding to the scene presented by the second electronic device. Specifically, the server may determine the first electronic device based on the second electronic device and/or the geographical location of the scene presented by the second electronic device in at least one of the following three manners: (1) Geohash (geohash) algorithm: A geohash spatial index algorithm is used to serialize two-dimensional spatial longitude and latitude data and decompose the data into different regions based on coordinates, and therefore may be used as a state synchronization strategy of the open world. (2) A nine-grid algorithm, serving as a universal transverse Mercator grid system (universal transverse Mercator grid system, UTM) coordinate system and a variable position system (variable position system, VPS) positioning algorithm, implements centimeter-level state synchronization, and has high synchronization precision, and therefore may be used as a state synchronization policy for VPS coverage. (3) When a distance between the first electronic device and the second electronic device is less than or equal to a second threshold, and a quantity of users (a quantity of electronic devices that keep communication with the server) is limited in space in which the distance between the first electronic device and the second electronic device is less than or equal to the second threshold, where the space may be considered as a small scene (for example, a small conference room), the server sends the first indication information to all first electronic devices in the small scene.

In this way, when content of a designed scene presented by the second electronic device changes, the server searches, based on the second electronic device and/or the geographical location of the scene presented by the second electronic device, for another electronic device like the first electronic device that is within a first distance from the second electronic device and/or the scene presented by the second electronic device, and synchronizes changed content of the designed scene on the second electronic device to the another electronic device. Alternatively, when the second electronic device and/or the geographical location of the scene presented by the second electronic device change/changes, the server searches, based on a changed second electronic device/changed geographical location of the scene presented by the second electronic device, for another electronic device like the first electronic device that is within a first distance from the second electronic device and/or the scene presented by the second electronic device, and synchronizes content of a designed scene on the another electronic device to the electronic device.

In an example, the server may determine the first electronic device based on the geographical location of the scene presented by the second electronic device.

In this example, the first information further indicates the geographical location of the scene presented by the second electronic device. In this way, the server determines the first electronic device based on the geographical location of the scene presented by the second electronic device. A distance between a geographical location of the scene presented by the first electronic device and the geographical location of the scene presented by the second electronic device is less than or equal to a first threshold. In other words, in this example, the server determines, as the first electronic device, a corresponding electronic device that displays a scene having a geographical location close to the geographical location of the scene presented by the second electronic device.

In another example, the server determines the first electronic device based on both the geographical location of the scene presented by the second electronic device and a geographical location of the second electronic device.

In this example, the first information further indicates the geographical location of the scene presented by the second electronic device and the geographical location of the second electronic device. In this way, the server determines the first electronic device based on the geographical location of the scene presented by the second electronic device and the geographical location of the second electronic device. A distance between the geographical location of the scene presented by the first electronic device and the geographical location of the scene presented by the second electronic device is less than or equal to a first threshold, and the distance between the first electronic device and the second electronic device is less than or equal to the second threshold. In other words, in this example, the server determines, as the first electronic device, a corresponding electronic device that is close to the second electronic device in geographical location and that displays a scene having a geographical location close to the geographical location of the scene presented by the second electronic device.

For example, the geographical location in this embodiment of this application may include a longitude and a latitude.

It should be understood that, if a scene is a virtual reality scene, a geographical location of the virtual reality scene may be a geographical location of a real scene corresponding to the virtual reality scene.

S520: The first electronic device displays, based on the first indication information, the newly added material in the scene presented by the first electronic device.

The attribute parameter of the newly added material in the scene presented by the second electronic device is the same as an attribute parameter of the newly added material in the scene presented by the first electronic device.

For example, as shown in FIG. 4(c), the attribute parameter of the material 2213 in the first VR scene of the mobile phone 220 is the same as the attribute parameter of the material 2116 in the first VR scene of the mobile phone 210.

For another example, as shown in FIG. 8(a), the attribute parameter of the "Chick" AR template in the first AR scene of the mobile phone 320 is the same as the attribute parameter of the "Chick" AR template in the first VR scene of the computer 310.

For another example, as shown in FIG. 10(b)-1 to FIG. 10(b)-3, the attribute parameter of the material 4216 in the second AR scene of the tablet 420 and the attribute parameter in the second AR scene viewed by the user 460 through the AR glasses 430 are separately the same as the attribute parameter of the material 4116 in the second AR scene of the mobile phone 410.

According to S510 and S520, when the user adds the material to the scene presented by the second electronic device, the first electronic device also synchronously adds the material to the scene that is presented by the first electronic device and that corresponds to a same real scene with the scene presented by the second electronic device. In this way, the same material in a same scene (for example, a same VR scene, a same AR scene, or a VR scene and an AR scene corresponding to the VR scene) can be synchronously edited in real time. This helps improve user experience.

Optionally, in some embodiments, as shown in FIG. 12, after S520, the method 500 may further include S560 to S590. The following describes S560 to S590 in detail.

S560: The second electronic device changes, in response to detecting a second operation in the scene presented by the second electronic device, the attribute parameter of the newly added material in the scene presented by the second electronic device.

For example, if the second electronic device is the mobile phone 210 shown in FIG. 4(a) to FIG. 4(e), the second operation may be an operation that the user 230 moves the material 2116 from a location shown in FIG. 4(c) to a location shown in FIG. 4(d). In this way, when the mobile phone 210 detects that the user 230 moves the material 2116 from the location shown in FIG. 4(c) to the location shown in FIG. 4(d), the mobile phone 210 may adjust a location of the material 2116 (an example of the newly added material) to the location shown in FIG. 4(d) (an example of a changed attribute parameter of the newly added material in the scene presented by the second electronic device).

For another example, if the second electronic device is the mobile phone 210 shown in FIG. 4(a) to FIG. 4(e), the second operation may be an operation that the user 230 zooms in the material 2116 from a size shown in FIG. 4(d) to a size shown in FIG. 4(e). In this way, when the mobile phone 210 detects that the user 230 zooms in the material 2116 from the size shown in FIG. 4(d) to the size shown in FIG. 4(e), the mobile phone 210 may adjust a size of the material 2116 (an example of the newly added material) to the size shown in FIG. 4(e) (an example of a changed attribute parameter of the newly added material in the scene presented by the second electronic device).

S570: The second electronic device sends second information to the server, and correspondingly, the server receives the second information from the second electronic device.

The second information indicates the changed attribute parameter of the newly added material in the scene presented by the second electronic device.

S580: The server sends second indication information to the first electronic device, and correspondingly, the first electronic device receives the second indication information from the server.

The second indication information indicates to synchronously adjust the newly added material in the scene presented by the first electronic device, and the second indication information includes the changed attribute parameter of the newly added material in the scene presented by the second electronic device.

S590: The first electronic device adjusts, based on the second indication information, the newly added material in the scene presented by the first electronic device.

An adjusted attribute parameter of the newly added material in the scene presented by the first electronic device is the same as the changed attribute parameter of the newly added material in the scene presented by the second electronic device.

For example, as shown in FIG. 4(d) or FIG. 4(e), an attribute parameter of the material 2213 in the first VR scene of the mobile phone 220 is the same as an attribute parameter of the material 2116 in the first VR scene of the mobile phone 210.

Optionally, in some embodiments, the newly added material in S560 to S590 may alternatively be another material, and the another material exists in both the scene presented by the first electronic device and the scene presented by the second electronic device. In this case, the method 500 may not include S510 and S520.

According to S560 to S590, when the user changes an attribute of the newly added material in the scene presented by the second electronic device, the first electronic device also synchronously changes an attribute of the newly added material in the scene that is displayed by the first electronic device and that corresponds to a same real scene with the scene presented by the second electronic device. In this way, the same material in a same scene (for example, a same VR scene, a same AR scene, or a VR scene and an AR scene corresponding to the VR scene) can be synchronously edited in real time. This helps improve user experience.

Optionally, in some embodiments, as shown in FIG. 12, the method 500 further includes S600 to S620. The following describes S600 to S620 in detail.

S600: The second electronic device sends third information to the server in response to detecting a third operation on the newly added material. Correspondingly, the server receives the third information from the second electronic device.

The third information indicates that the newly added material is in an editing state in the scene presented by the second electronic device.

S610: The server sends third indication information to the first electronic device. Correspondingly, the first electronic device receives the third indication information from the server.

The third indication information indicates to lock an editing state of the newly added material in the scene presented by the first electronic device.

S620: The first electronic device locks, based on the third indication information, the editing state of the newly added material in the scene presented by the first electronic device.

Optionally, after locking the editing state of the newly added material in the scene presented by the first electronic device, the first electronic device may further display prompt information, to prompt the user that the first electronic device has locked the editing state of the newly added material in the scene presented by the first electronic device.

A form of the prompt information is not limited in embodiments of this application.

For example, as shown in FIG. 4(c), the mobile phone 220 may display the contour line 2214 around the material 2213, to prompt the user that the mobile phone 220 has locked an editing state of the material 2213 in the first VR scene.

For example, as shown in FIG. 8(a), the mobile phone 320 may display the contour line 3222 around the "Chick" AR template 3221, to prompt the user that the mobile phone 320 has locked an editing state of the "Chick" AR template 3221 in the first AR scene.

For example, as shown in FIG. 10(b)-1 to FIG. 10(b)-3, the tablet 420 may display the contour line 4217 around the material 4216, to prompt the user that the tablet 420 has locked an editing state of the material 4216 in the second AR scene.

Optionally, in some embodiments, the newly added material in S600 to S620 may alternatively be another material, and the another material exists in both the scene presented by the first electronic device and the scene presented by the second electronic device. In this case, the method 500 may not include S510 and S520.

According to S600 to S620, when the user edits the newly added material in the scene presented by the second electronic device, the newly added material in the scene presented by the first electronic device (which corresponds to a same real scene with the scene presented by the second electronic device) is in a locked state. In this way, in a same scene (for example, a same VR scene, a same AR scene, or a VR scene and an AR scene corresponding to the VR scene), the user can intuitively perceive a status of the material synchronously displayed in real time, to prevent the same material from being simultaneously edited on different electronic devices. This helps improve user experience.

Optionally, in some embodiments, after S520, the method 500 further includes S630 to S660. The following describes S630 to S660 in detail.

S630: The second electronic device deletes, in response to detecting a fourth operation on the newly added material, the newly added material in the scene presented by the second electronic device.

S640: The second electronic device sends fourth information to the server, and correspondingly, the server receives the fourth information from the second electronic device. The fourth information indicates that the newly added material in the scene presented by the second electronic device has been deleted.

S650: The server sends fourth indication information to the first electronic device, and correspondingly, the first electronic device receives the fourth indication information from the server. The fourth indication information indicates to delete the newly added material in the scene presented by the first electronic device.

S660: The second electronic device deletes, based on the fourth indication information, the newly added material in the scene presented by the first electronic device.

According to S630 to S660, when the user deletes the newly added material in the scene presented by the second electronic device, the first electronic device synchronously deletes the newly added material in the scene that is presented by the first electronic device and that corresponds to the same real scene with the scene presented by the second electronic device. In this way, the same material in a same scene (for example, a same VR scene, a same AR scene, or a VR scene and an AR scene corresponding to the VR scene) can be synchronously edited in real time. This helps improve user experience.

Optionally, in some embodiments, the first electronic device and the second electronic device in S630 to S660 may be interchanged. In this way, when the user deletes the newly added material in the scene presented by the first electronic device, the second electronic device synchronously deletes the newly added material in a scene that is presented by the second electronic device and that corresponds to a same real scene with a scene presented by the first electronic device.

Optionally, in some embodiments, the newly added material in S630 to S660 may alternatively be another material, and the another material exists in both the scene presented by the first electronic device and the scene presented by the second electronic device. In this case, the method 500 may not include S510 and S520.

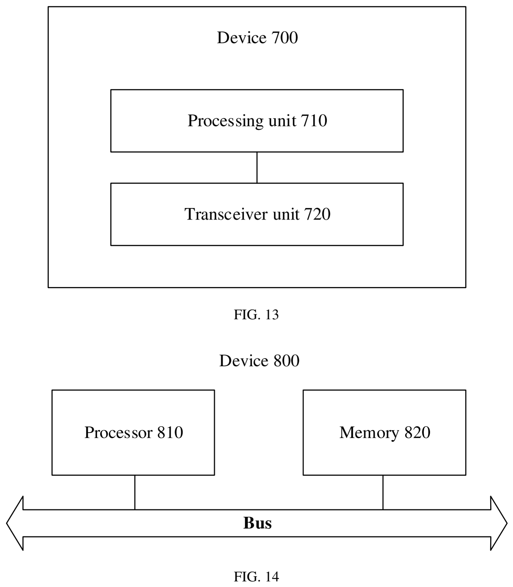

The following describes devices provided in embodiments of this application with reference to FIG. 13 and FIG. 14.

FIG. 13 is a block diagram of a device according to an embodiment of this application.

For example, as shown in FIG. 13, the device 700 includes a processing unit 710, and the processing unit 710 is configured to process data.

Optionally, in some embodiments, the device 700 may further include a transceiver unit 720. The transceiver unit 720 may communicate with the outside, and the transceiver unit 720 may also be referred to as a communication interface or a communication unit.

Optionally, the device 700 may further include a storage unit. The storage unit may be configured to store instructions and/or data. The processing unit 710 may read the instructions and/or the data in the storage unit.

In an implementation, the device 700 may be configured to perform an action performed by the first electronic device in the foregoing method 500. In this case, the device 700 may be the first electronic device or a component that may be disposed in the first electronic device. The processing unit 710 is configured to perform a processing-related operation on the first electronic device side in the foregoing method 500. The transceiver unit 720 is configured to perform a receiving/sending-related operation on the first electronic device side in the foregoing method 500.

In another implementation, the device 700 may be configured to perform an action performed by the server in the foregoing method 500. In this case, the device 700 may be the server or a component that may be disposed in the server. The processing unit 710 is configured to perform a processing-related operation on the server side in the foregoing method 500. The transceiver unit 720 is configured to perform a receiving/sending-related operation on the server in the foregoing method 500.

In still another implementation, the device 700 may be configured to perform an action performed by the first electronic device in the foregoing method 500. In this case, the device 700 may be the first electronic device or a component that may be disposed in the first electronic device. The processing unit 710 is configured to perform a processing-related operation on the first electronic device side in the foregoing method 500. The transceiver unit 720 is configured to perform a receiving/sending-related operation on the first electronic device side in the foregoing method 500.

FIG. 14 is a diagram of a structure of a device 800 according to an embodiment of this application.

As shown in FIG. 14, the device 800 includes one or more processors 810 and one or more memories 820. The one or more memories 820 store one or more programs, and the one or more programs include instructions. When the instructions are run by the one or more processors 810, the device 800 is enabled to perform the technical solution performed by the first electronic device in the method 500, or the device 800 is enabled to perform the technical solution performed by the server in the method 500.

An embodiment of this application provides a system, including a first electronic device and a server. The first electronic device is configured to perform the technical solution performed by the first electronic device in the method 500, and/or the server is configured to perform the technical solution performed by the server in the method 500. An implementation principle and technical effect thereof are similar to those of the foregoing method-related embodiments. Details are not described herein again.

Optionally, the system may further include a second electronic device. The second electronic device is configured to perform the technical solution performed by the second electronic device in the method 500. An implementation principle and technical effect thereof are similar to those of the foregoing method-related embodiments. Details are not described herein again.

An embodiment of this application provides a program product. When the program product runs on a first electronic device, the first electronic device is enabled to perform the technical solutions in the foregoing embodiments. An implementation principle and technical effect thereof are similar to those of the foregoing method-related embodiments. Details are not described herein again.

An embodiment of this application provides a program product. When the program product runs on a server, the server is enabled to perform the technical solutions in the foregoing embodiments. An implementation principle and technical effect thereof are similar to those of the foregoing method-related embodiments. Details are not described herein again.

An embodiment of this application provides a readable storage medium. The readable storage medium includes instructions. When the instructions are run on a first electronic device, the first electronic device is enabled to perform the technical solutions in the foregoing embodiments. An implementation principle and technical effect thereof are similar. Details are not described herein again.

An embodiment of this application provides a readable storage medium. The readable storage medium includes instructions. When the instructions are run on a server, the server is enabled to perform the technical solutions in the foregoing embodiments. An implementation principle and technical effect thereof are similar. Details are not described herein again.

An embodiment of this application provides a chip. The chip is configured to execute instructions. When the chip runs, the technical solutions in the foregoing embodiment are performed. An implementation principle and technical effect thereof are similar. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for ease and brevity of description, for a detailed working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A synchronous display method, comprising:
receiving, by a first electronic device, first indication information, wherein the first indication information comprises an attribute parameter of a newly added material in a scene presented by a second electronic device; and
displaying, by the first electronic device based on the first indication information, the newly added material in a scene presented by the first electronic device, wherein the attribute parameter of the newly added material in the scene presented by the second electronic device is the same as an attribute parameter of the newly added material in the scene presented by the first electronic device; and
the scene presented by the first electronic device and the scene presented by the second electronic device are augmented reality scenes, and in addition to the newly added material, materials in the scene presented by the first electronic device and the scene presented by the second electronic device are at least partially the same; or
the scene presented by the first electronic device is a virtual reality scene, and the scene presented by the second electronic device is an augmented reality scene corresponding to the scene presented by the first electronic device; or
the scene presented by the first electronic device is an augmented reality scene, and the scene presented by the second electronic device is a virtual reality scene corresponding to the scene presented by the first electronic device.

2. The method according to claim 1, wherein after displaying the newly added material in the scene presented by the first electronic device, the method further comprises:
receiving, by the first electronic device, second indication information, wherein the second indication information comprises a changed attribute parameter of the newly added material in the scene presented by the second electronic device; and
adjusting, by the first electronic device based on the second indication information, the newly added material in the scene presented by the first electronic device, wherein an adjusted attribute parameter of the newly added material in the scene presented by the first electronic device is the same as the changed attribute parameter of the newly added material in the scene presented by the second electronic device.

3. The method according to claim 1 or 2, wherein after displaying the newly added material in the scene presented by the first electronic device, the method further comprises:
receiving, by the first electronic device, third indication information when the newly added material is in an editing state in the scene presented by the second electronic device; and
locking, by the first electronic device based on the third indication information, an editing state of the newly added material in the scene presented by the first electronic device.

4. The method according to any one of claims 1 to 3, wherein the attribute parameter comprises at least one of a name, a size, a location, and a direction.

5. The method according to any one of claims 1 to 4, wherein a distance between a geographical location of the scene presented by the first electronic device and a geographical location of the scene presented by the second electronic device is less than or equal to a first threshold.

6. The method according to any one of claims 1 to 5, wherein a distance between the second electronic device and the first electronic device is less than or equal to a second threshold.

7. The method according to claim 3, wherein the first indication information, the second indication information, and/or the third indication information are/is information sent by a server.

8. A synchronous display method, comprising:
sending, by a server, first indication information to a first electronic device, wherein the first indication information indicates the first electronic device to synchronously display a newly added material in a presented scene, the first indication information comprises an attribute parameter of the newly added material in a scene presented by a second electronic device, and the attribute parameter of the newly added material in the scene presented by the second electronic device is the same as an attribute parameter of the newly added material in the scene presented by the first electronic device; and
the scene presented by the first electronic device and the scene presented by the second electronic device are augmented reality scenes, and in addition to the newly added material, materials in the scene presented by the first electronic device and the scene presented by the second electronic device are at least partially the same; or
the scene presented by the first electronic device is a virtual reality scene, and the scene presented by the second electronic device is an augmented reality scene corresponding to the scene presented by the first electronic device; or
the scene presented by the first electronic device is an augmented reality scene, and the scene presented by the second electronic device is a virtual reality scene corresponding to the scene presented by the first electronic device.

9. The method according to claim 8, wherein before sending, by the server, the first indication information to the first electronic device, the method further comprises:
receiving, by the server, first information from the second electronic device, wherein the first information indicates the attribute parameter of the newly added material in the scene presented by the second electronic device.

10. The method according to claim 9, wherein the first information further indicates a geographical location of the scene presented by the second electronic device, and before sending, by the server, the first indication information to the first electronic device, the method further comprises:
determining, by the server, the first electronic device based on the geographical location of the scene presented by the second electronic device, wherein a distance between a geographical location of the scene presented by the first electronic device and the geographical location of the scene presented by the second electronic device is less than or equal to a first threshold.

11. The method according to claim 10, wherein the first information further indicates a geographical location of the second electronic device, and determining, by the server, the first electronic device based on the geographical location of the scene presented by the second electronic device comprises:
determining, by the server, the first electronic device based on the geographical location of the scene presented by the second electronic device and the geographical location of the second electronic device, wherein a distance between the first electronic device and the second electronic device is less than or equal to a second threshold.

12. The method according to any one of claims 8 to 11, wherein after sending, by the server, the first indication information to the first electronic device, the method further comprises:
sending, by the server, second indication information to the first electronic device, wherein the second indication information indicates to synchronously adjust the newly added material in the scene presented by the first electronic device, the second indication information comprises a changed attribute parameter of the newly added material in the scene presented by the second electronic device, and an adjusted attribute parameter of the newly added material in the scene presented by the first electronic device is the same as the changed attribute parameter of the newly added material in the scene presented by the second electronic device.

13. The method according to claim 12, wherein before sending, by the server, the second indication information to the first electronic device, the method further comprises:
receiving, by the server, second information from the second electronic device, wherein the second information indicates the changed attribute parameter of the newly added material in the scene presented by the second electronic device.

14. The method according to any one of claims 8 to 13, wherein after sending, by the server, the first indication information to the first electronic device, the method further comprises:
sending, by the server, third indication information to the first electronic device, wherein the third indication information indicates to lock an editing state of the newly added material in the scene presented by the first electronic device.

15. The method according to claim 14, wherein before sending, by the server, the third indication information to the first electronic device, the method further comprises:
receiving, by the server, third information from the second electronic device, wherein the third information indicates that the newly added material is in an editing state in the scene presented by the second electronic device.

16. The method according to any one of claims 8 to 15, wherein the attribute parameter comprises at least one of a name, a size, a location, and a direction.

17. A system, wherein the system comprises a first electronic device and a server, wherein
the server is configured to send first indication information to the first electronic device, wherein the first indication information comprises an attribute parameter of a newly added material in a scene presented by a second electronic device;
the first electronic device is configured to display, based on the first indication information, the newly added material in a scene presented by the first electronic device, wherein the attribute parameter of the newly added material in the scene presented by the second electronic device is the same as an attribute parameter of the newly added material in the scene presented by the first electronic device; and
the scene presented by the first electronic device and the scene presented by the second electronic device are augmented reality scenes, and in addition to the newly added material, materials in the scene presented by the first electronic device and the scene presented by the second electronic device are at least partially the same; or
the scene presented by the first electronic device is a virtual reality scene, and the scene presented by the second electronic device is an augmented reality scene corresponding to the scene presented by the first electronic device; or
the scene presented by the first electronic device is an augmented reality scene, and the scene presented by the second electronic device is a virtual reality scene corresponding to the scene presented by the first electronic device.

18. The system according to claim 17, wherein
the server is further configured to: before sending the first indication information to the first electronic device, determine the first electronic device based on a geographical location of the scene presented by the second electronic device, wherein a distance between a geographical location of the scene presented by the first electronic device and the geographical location of the scene presented by the second electronic device is less than or equal to a first threshold.

19. The system according to claim 18, wherein
the server is further specifically configured to determine the first electronic device based on the geographical location of the scene presented by the second electronic device and the geographical location of the second electronic device, wherein a distance between the first electronic device and the second electronic device is less than or equal to a second threshold.

20. The system according to any one of claims 17 to 19, wherein the attribute parameter comprises at least one of a name, a size, a location, and a direction.

21. A first electronic device, comprising:
one or more processors;
one or more memories; and
one or more programs, wherein the one or more programs are stored in the one or more memories, the one or more programs comprise instructions, and when the instructions are executed by the one or more processors, the first electronic device is enabled to perform the method according to any one of claims 1 to 7.

22. A server, comprising:
one or more processors;
one or more memories; and
one or more programs, wherein the one or more programs are stored in the one or more memories, the one or more programs comprise instructions, and when the instructions are executed by the one or more processors, the server is enabled to perform the method according to any one of claims 8 to 16.

23. A system, wherein the system comprises the first electronic device according to claim 21 and the server according to claim 22.

24. A readable storage medium, comprising instructions, wherein when the instructions are run on a first electronic device, the first electronic device is enabled to perform the method according to any one of claims 1 to 7.

25. A readable storage medium, comprising instructions, wherein when the instructions are run on a server, the server is enabled to perform the method according to any one of claims 8 to 16.
